# EUROPEAN PATENT APPLICATION

(11) **EP 4 580 298 A1**
(43) Date of publication of application: **02.07.2025**
(21) Application number: 23864584.0
(22) Date of filing: 01.09.2023
(51) Int. Cl.: H04W 74/08

(54) **DATA TRANSMISSION METHOD AND APPARATUS**

(30) Priority: 16.09.2022 CN 202211132100
(71) Applicant: Huawei Technologies Co., Ltd., Shenzhen, Guangdong 518129 (CN)
(72) Inventor: YUAN, Fangchao, Shenzhen, Guangdong 518129 (CN); CHEN, Peng, Shenzhen, Guangdong 518129 (CN); YANG, Yongchao, Shenzhen, Guangdong 518129 (CN)
(74) Representative: Grünecker Patent- und Rechtsanwälte PartG mbB
(86) International application number: PCT/CN2023/116574
(87) International publication number: WO 2024/055852

(57) **Abstract**

A data transmission method and an apparatus are provided, to reduce a possibility of a collision during transmission and reduce a communication latency, and relate to the field of wireless communication technologies. In the method, a first device may send a first frame without performing channel listening. The first device may access a channel by using the first frame. When no data is transmitted on the channel, the first device may preempt the channel by using the first frame. When data is transmitted on the channel, the first frame may interrupt the data transmission. In addition, when detecting that a channel state is idle, the first device sends a second frame after waiting for first duration, so that a collision of the second frame may be avoided. The method and the apparatus may be applied to a wireless local area network system that supports the 802.11 series protocol, for example, a next-generation Wi-Fi protocol of IEEE 802.11ax, such as 802.11be, Wi-Fi 7, or EHT, or a next generation of 802.11be, such as Wi-Fi 8.

## Description

### CROSS-REFERENCE TO RELATED APPLICATIONS

This application claims priority to Chinese Patent Application No. 202211132100.0, filed with the China National Intellectual Property Administration on September 16, 2022 and entitled "DATA TRANSMISSION METHOD AND APPARATUS", which is incorporated herein by reference in its entirety.

### TECHNICAL FIELD

This application relates to the field of wireless communication technologies, and in particular, to a data transmission method and an apparatus.

### BACKGROUND

Currently, in a Wi-Fi communication system, a node needs to transmit data based on the carrier sense multiple access (carrier sense multiple access, CSMA) protocol. In CSMA, a listen before talk (listen before talk, LBT) mechanism is introduced. An idea of CSMA in the LBT mechanism is: "Before sending data each time, a node first listens to whether a channel is idle. If the channel is not idle, the node does not send data. The node may send data only when the channel is idle, to avoid interrupting an ongoing transmission process of another device."

In CSMA, the node further needs to perform a random backoff (backoff) process before sending data each time. However, there is a collision probability in a channel access manner based on CSMA random backoff, and after each collision, a backoff window is increased exponentially. In addition, more concurrent users lead to a higher collision probability and a longer access latency. Although Wi-Fi communication has good performance in terms of average latency, there is a possibility of a collision during access, resulting in a long tail latency of Wi-Fi communication.

### SUMMARY

Embodiments of this application provide a data transmission method and an apparatus, to reduce a possibility of a collision during single transmission and reduce a communication latency.

According to a first aspect, a data transmission method is provided. The method may be performed by a first device, or may be performed by a chip/chip system. In the method, the first device sends a first frame to a second device. The first device does not need to perform channel listening when sending the first frame. When detecting that a channel state is idle, the first device sends a second frame after waiting for first duration.

Based on this solution, the first device may send the first frame without performing channel listening. The first device may access a channel by using the first frame. When no data is transmitted on the channel, the first device may preempt the channel by using the first frame. When data is transmitted on the channel, the first frame may interrupt the data transmission. In addition, when detecting that the channel state is idle, the first device may send the second frame after waiting for the first duration, so that a frame loss caused by a collision of the second frame may be reduced or avoided.

In a possible implementation, the first duration is less than or equal to (point interframe space, PIFS). It may be understood that the PIFS may be a PIFS in a conventional technology, for example, 25 microseconds, or may be evolution of the conventional technology. Based on the foregoing solution, the first duration is less than or equal to the PIFS, so that waiting duration of the second device may be reduced, to reduce a latency of the second frame.

In a possible implementation, the first frame includes a first duration (duration) field, the first duration field indicates second duration, and the second frame is sent within the second duration. For example, a start time of the second duration may be an end time of the first frame, and an end time of the second duration may be a start time of the second frame. Optionally, a received address in the first frame is an address of the second device.

In a related technology, the duration field indicates duration of occupying the channel. Therefore, after receiving and parsing the duration field in the frame, another device does not transmit data within the duration indicated by the duration field. Therefore, based on the foregoing solution, the duration field is set to the second duration, so that a purpose of occupying the channel for the second duration may be achieved. In the second duration, another device does not access the channel to send data, so that reliability of the second frame may be improved, and a possibility of a frame loss caused by a collision of the second frame may be reduced.

In a possible implementation, the first device receives a third frame from a third device. The first device does not send an acknowledgement frame for the third frame. For example, before the first device sends the first frame, the first device may receive the third frame from the third device. If the first device does not send the acknowledgement frame for the third frame, a transmit end of the third frame considers that the third frame is lost, and re-accesses the channel after waiting for the acknowledgement frame times out. Therefore, an opportunity to send the second frame may be provided. In a possible scenario, the foregoing solution may interrupt a burst (burst) sequence of a greedy terminal.

In a possible implementation, the first frame may not need to be replied with an acknowledgement frame. For example, an acknowledgement frame indicator field indicates that the first frame does not need to be replied with an acknowledgement frame. Based on the foregoing solution, the first device may quickly preempt the channel by using the first frame that does not need to be replied with an acknowledgement frame. In addition, because the first frame does not need to be replied with an acknowledgement frame, a collision of the first frame with a frame that is being transmitted on the channel does not affect the first device.

In a possible implementation, the first frame includes a control frame, for example, a clear to send (clear to send, CTS) frame, or the first frame includes a data frame.

In a possible implementation, the received address in the first frame is an address of the first device. Based on this solution, because the received address in the first frame is the address of the first device, another device does not reply with an acknowledgement frame after receiving the first frame, so that the first frame is not replied with an acknowledgement frame.

In a possible implementation, after the first device sends the second frame, the first device receives an acknowledgement frame sent by the second device for the second frame. The first device receives a fourth frame sent by the second device. The second frame includes a second duration (duration) field, the second duration field indicates third duration, and the fourth frame is sent within the third duration.

In a related technology, the duration field indicates duration of occupying the channel. Therefore, after receiving and parsing the duration field in the frame, another device does not transmit data within the duration indicated by the duration field. Therefore, based on the foregoing solution, the duration field is set to the third duration, and in the third duration, a device other than the first device and/or a receive end of the second frame, that is, the second device, cannot access the channel to send data, so that the channel is reserved.

According to a second aspect, a communication apparatus is provided, including a processing unit and a transceiver unit.

The transceiver unit is configured to send a first frame to a second device. The first device does not need to perform channel listening when sending the first frame. The processing unit is configured to detect a channel state. The transceiver unit is further configured to: when it is detected that the channel state is idle, send a second frame after waiting for first duration.

In a possible implementation, the first duration is less than or equal to a PIFS. It may be understood that the PIFS may be a PIFS in a conventional technology, for example, 25 microseconds, or may be evolution of the conventional technology.

In a possible implementation, the first frame includes a first duration (duration) field, the first duration field indicates second duration, and the second frame is sent within the second duration. For example, a start time of the second duration may be an end time of the first frame, and an end time of the second duration may be a start time of the second frame.

Optionally, a received address in the first frame is an address of the second device.

In a possible implementation, the transceiver unit is further configured to receive a third frame from a third device. The processing unit is further configured to determine not to send an acknowledgement frame for the third frame.

In a possible implementation, the first frame may not need to be replied with an acknowledgement frame. For example, an acknowledgement frame indicator field indicates that the first frame does not need to be replied with an acknowledgement frame.

In a possible implementation, the first frame includes a control frame, for example, a clear to send (clear to send, CTS) frame, or the first frame includes a data frame.

In a possible implementation, the received address in the first frame is an address of the first device.

In a possible implementation, the transceiver unit is further configured to receive an acknowledgement frame sent by the second device for the second frame. The transceiver unit is further configured to receive a fourth frame sent by the second device. The second frame includes a second duration (duration) field, the second duration field indicates third duration, and the fourth frame is sent within the third duration.

According to a third aspect, a communication apparatus is provided. The communication apparatus may be the communication apparatus in any possible implementation of the second aspect in the foregoing embodiment, or may be a chip disposed in the communication apparatus in any one of the second aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the method performed by the first device in any possible implementation of the first aspect.

It should be understood that the communication interface may be implemented by using an antenna, a feeder, a codec, and the like in the communication apparatus. Alternatively, if the communication apparatus is a chip disposed in a network device or a terminal device, the communication interface may be an input/output interface of the chip, for example, an input/output pin. The communication apparatus may further include a transceiver, used by the communication apparatus to communicate with another device.

According to a fourth aspect, an embodiment of this application provides a chip system. The chip system includes a processor, may further include a memory, and is configured to implement the method performed by a communication apparatus in any possible implementation of the first aspect. In a possible implementation, the chip system further includes the memory, configured to store program instructions and/or data. The chip system may include a chip, or may include a chip and another discrete device.

According to a fifth aspect, this application provides a computer-readable storage medium. The computer-readable storage medium stores a computer program or instructions, and when the computer program or instructions are run, the methods performed by the first device in the foregoing aspects are implemented.

According to a sixth aspect, a computer program product is provided. The computer program product includes computer program code or instructions, and when the computer program code or instructions are run, the methods performed by the first device in the foregoing aspects are performed.

According to a seventh aspect, a communication apparatus is provided. The communication apparatus includes units or modules configured to perform the methods in the foregoing aspects.

According to an eighth aspect, a chip system is provided, including a logic circuit and an input/output unit. The logic circuit is configured to perform the method performed by the first device in any possible implementation of the first aspect. The input/output unit is used by the first device to communicate with another apparatus, for example, a second device.

For the second aspect to the eighth aspect and beneficial effects of implementations of the second aspect to the eighth aspect, refer to descriptions of the method in the first aspect and beneficial effects of implementations of the first aspect.

### BRIEF DESCRIPTION OF DRAWINGS

FIG. 1 is a diagram of a network architecture according to an embodiment of this application;
FIG. 2A is a diagram of a latency based on random backoff;
FIG. 2B is a diagram of a latency tail of a Wi-Fi system;
FIG. 3 is a scenario diagram of a data transmission method based on a time slice;
FIG. 4A is a diagram of each type of service packet in EDCA;
FIG. 4B is a diagram of a scenario in which a channel is preempted by using a PIFS;
FIG. 5 is a diagram of a data collision;
FIG. 6A is a diagram of a transmission characteristic of a greedy terminal;
FIG. 6B is a diagram of a collision between a burst of a greedy terminal and a service packet;
FIG. 7 is an example flowchart of a data transmission method according to an embodiment of this application;
FIG. 8 is a diagram of a structure of a possible first frame according to an embodiment of this application;
FIG. 9 is a diagram of a structure of another possible first frame according to an embodiment of this application;
FIG. 10A is a scenario diagram of a data transmission method according to an embodiment of this application;
FIG. 10B is another scenario diagram of a data transmission method according to an embodiment of this application;
FIG. 11A is another scenario diagram of a data transmission method according to an embodiment of this application;
FIG. 11B is another scenario diagram of a data transmission method according to an embodiment of this application;
FIG. 12 is another scenario diagram of a data transmission method according to an embodiment of this application;
FIG. 13 is another scenario diagram of a data transmission method according to an embodiment of this application;
FIG. 14 is another scenario diagram of a data transmission method according to an embodiment of this application;
FIG. 15A is another scenario diagram of a data transmission method according to an embodiment of this application;
FIG. 15B is another scenario diagram of a data transmission method according to an embodiment of this application;
FIG. 15C is another scenario diagram of a data transmission method according to an embodiment of this application;
FIG. 16 is another scenario diagram of a data transmission method according to an embodiment of this application;
FIG. 17 is another scenario diagram of a data transmission method according to an embodiment of this application;
FIG. 18 is another scenario diagram of a data transmission method according to an embodiment of this application;
FIG. 19 is another scenario diagram of a data transmission method according to an embodiment of this application;
FIG. 20 is another scenario diagram of a data transmission method according to an embodiment of this application;
FIG. 21 is another scenario diagram of a data transmission method according to an embodiment of this application;
FIG. 22 is another scenario diagram of a data transmission method according to an embodiment of this application;
FIG. 23 is another scenario diagram of a data transmission method according to an embodiment of this application;
FIG. 24 is another scenario diagram of a data transmission method according to an embodiment of this application;
FIG. 25 is another scenario diagram of a data transmission method according to an embodiment of this application;
FIG. 26 is another scenario diagram of a data transmission method according to an embodiment of this application;
FIG. 27 is a diagram of a communication apparatus according to an embodiment of this application;
FIG. 28 is a diagram of another communication apparatus according to an embodiment of this application;
FIG. 29 is a diagram of another communication apparatus according to an embodiment of this application; and
FIG. 30 is a diagram of another communication apparatus according to an embodiment of this application.

### DESCRIPTION OF EMBODIMENTS

"After" and "before" in embodiments of this application may be understood as a sequential relationship of sending times or a sequential relationship of receiving times. For example, that first information is after a first field may be understood as that a sending time of the first information is later than a sending time of the first field, or a receiving time of the first information is later than a receiving time of the first field. For another example, that first information is before a second field may be understood as that a sending time of the first information is earlier than a sending time of the second field, or a receiving time of the first information is earlier than a receiving time of the second field.

Embodiments of this application are applicable to a WLAN scenario, for example, applicable to the Institute of Electrical and Electronics Engineers (Institute of Electrical and Electronics Engineers, IEEE) 802.11 system standard, for example, 802.11a/b/g, 802.11n, 802.11ac, 802.11ax, or a next generation of 802.11ax, for example, the 802.11be standard, Wi-Fi 7, or extremely high throughput (extremely high throughput, EHT), 802.11ad, 802.11ay, 802.11bf, or a next generation of 802.11be, for example, Wi-Fi 8 or a next-generation standard. Alternatively, embodiments of this application are applicable to a wireless local area network system such as an internet of things (internet of things, IoT) network or a vehicle-to-everything (Vehicle to X, V2X) network.

The following uses an example in which embodiments of this application are applicable to a WLAN scenario. It should be understood that the WLAN develops from the 802.11a/g standard, and goes through 802.11n, 802.11ac, 802.11ax, and 802.11be that is currently being discussed. 802.11n may also be referred to as high throughput (high throughput, HT), 802.11ac may also be referred to as very high throughput (very high throughput, VHT), 802.11ax may also be referred to as high efficiency (high efficiency, HE) or Wi-Fi 6, 802.11be may also be referred to as EHT or Wi-Fi 7, and standards before HT, for example, 802.11a/b/g, may be collectively referred to as non-high throughput (Non-HT).

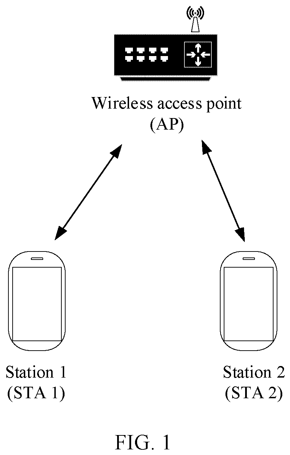

FIG. 1 is a diagram of a network architecture of a WLAN to which an embodiment of this application is applicable. In FIG. 1, that the WLAN includes one wireless access point (access point, AP) and two stations (stations, STAs) is used as an example. The STAs can receive radio frames sent by the AP, and can also send radio frames to the AP. In addition, embodiments of this application are also applicable to communication between APs. For example, the APs may communicate with each other by using a distributed system (distributed system, DS). Embodiments of this application are also applicable to communication between STAs. It should be understood that quantities of APs and STAs in FIG. 1 are merely an example. There may be more or less APs and STAs.

The access point may be an access point through which a terminal device (for example, a mobile phone) accesses a wired (or wireless) network, and is mainly deployed in a home, a building, and a campus, with a typical coverage radius ranging from dozens of meters to hundreds of meters. Certainly, the access point may alternatively be deployed outdoors. The access point is equivalent to a bridge that connects a wired network and a wireless network. A main function of the access point is to connect various wireless network clients together and then connect the wireless network to the Ethernet. Specifically, the access point may be a terminal device (for example, a mobile phone) or a network device (for example, a router) with a Wi-Fi chip. The access point may be a device that supports the 802.11be standard. Alternatively, the access point may be a device that supports a plurality of wireless local area network (wireless local area network, WLAN) standards of the 802.11 family, for example, 802.11ax, 802.11ac, 802.11ad, 802.11ay, 802.11n, 802.11g, 802.11b, 802.11a, and a next generation of 802.11be.

The station may be a wireless communication chip, a wireless sensor, a wireless communication terminal, or the like, and may also be referred to as a user. For example, the station may be a mobile phone, a tablet computer, a set-top box, a smart television set, a smart wearable device, a vehicle-mounted communication device, a computer, or the like that supports a Wi-Fi communication function. Optionally, the station may support the 802.11be standard. Alternatively, the station may support a plurality of wireless local area network (wireless local area network, WLAN) standards of the 802.11 family, for example, 802.11ax, 802.11ac, 802.11n, 802.11g, 802.11b, 802.11a, and a next generation of 802.11be.

For example, the access point and the station may be devices used in an internet of vehicles, internet of things nodes or sensors in an internet of things (IoT, internet of things), or the like, may be smart cameras, smart remote controls, or smart water/electricity meters in a smart home, or may be sensors in a smart city.

The AP and the STA in embodiments of this application may be an AP and a STA that are applicable to the IEEE 802.11 system standard. The AP is an apparatus that is deployed in a wireless communication network and that provides a wireless communication function for a STA associated with the AP. The AP may be used as a hub of the communication system, and is usually a network-side product that supports MAC and PHY of the 802.11 system standard, for example, may be a communication device such as a router, a gateway, a repeater, a communication server, a switch, or a bridge. Herein, for ease of description, the devices mentioned above are collectively referred to as an AP. The STA is usually a terminal product that supports media access control (media access control, MAC) and a physical layer (physical, PHY) of the 802.11 system standard, for example, a mobile phone or a notebook computer.

It may be understood that a first device in embodiments of this application may be an AP or a STA. Similarly, a second device in embodiments of this application may be an AP or a STA.

Currently, in a Wi-Fi communication system, a node (for example, an AP or a STA) needs to transmit data based on the carrier sense multiple access (carrier sense multiple access, CSMA) protocol. In CSMA, a listen before talk (listen before talk, LBT) mechanism is introduced. An idea of CSMA in the LBT mechanism is: "Before sending data each time, a node first listens to whether a channel is idle by using a clear channel assessment (clear channel assessment, CCA) technology. If the channel is not idle, the node does not send data. The node may send data only when the channel is idle, to avoid interrupting an ongoing transmission process of another device."

In CSMA, the node further needs to perform a random backoff (backoff) process before sending data each time. Specifically, before sending the data, the node may randomly generate a random backoff count value based on a specified parameter. The node may listen to the channel in each slot (slot). If a channel state is idle, the node may perform random backoff, that is, the random backoff count value is decreased by 1. If the channel state is not idle, the random backoff count value is not decreased by 1. The node may send the data only when the random backoff count value is 0.

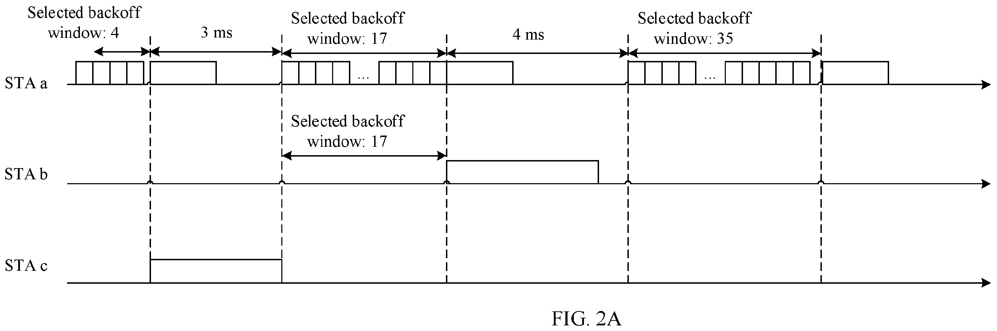

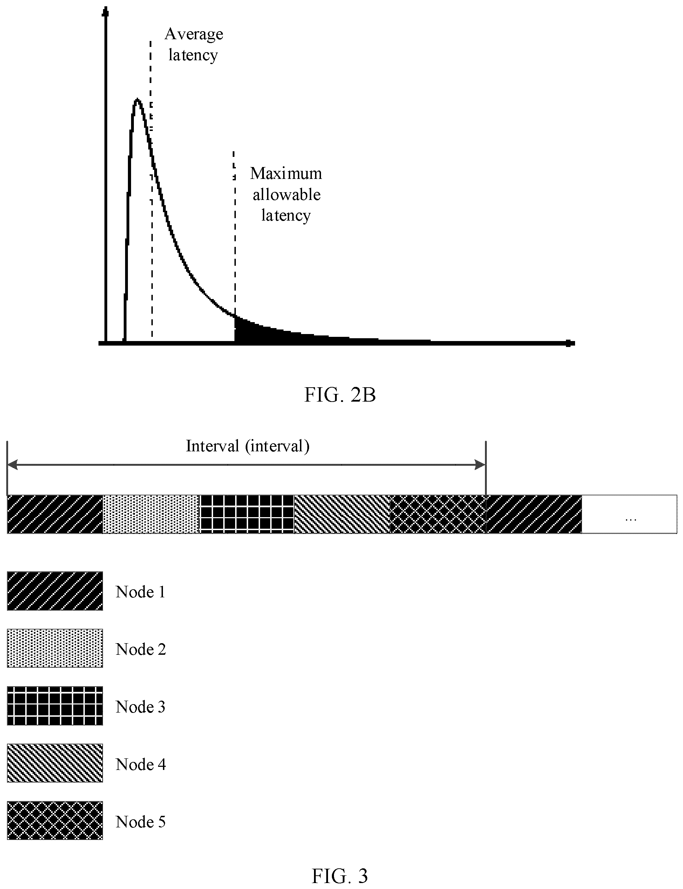

However, there is a collision probability in a channel access manner based on CSMA random backoff, and after each collision, a backoff window is increased exponentially, as shown in FIG. 2A. In addition, more concurrent users lead to a higher collision probability and a longer access latency. Although Wi-Fi communication has good performance in terms of average latency, there is a possibility of a collision during access, resulting in a long tail latency of Wi-Fi communication, as shown in FIG. 2B.

Currently, low-latency and high-reliability scenarios have become new opportunities and growth points for WLAN products. For existing industrial scenarios, home gaming scenarios, or the like, latency requirements are increasingly high. In such scenarios, what people are concerned about is a tail latency. However, it is difficult to ensure a success rate of single transmission in Wi-Fi communication. To be specific, when a link layer is reliable, a collision of single transmission cannot be avoided, and therefore, a tail latency is caused because retransmission is required. Therefore, how to reduce the tail latency of Wi-Fi communication, that is, how to ensure reliability of single transmission, becomes particularly important.

To improve reliability of single transmission and reduce or avoid a data collision, data may be transmitted in the following two manners currently.

Manner 1: Data transmission of all nodes is managed and commanded by an AP, to avoid a collision and air interface contention. The AP allocates a time slice to each node, and each node transmits data based on the time slice. Refer to FIG. 3. The AP may allocate slots to five nodes. For example, a node 1 corresponds to a slot 1 (slot 1), a node 2 corresponds to a slot 2, a node 3 corresponds to a slot 3, a node 4 corresponds to a slot 4, and a node 5 corresponds to a slot 5. In this way, the foregoing five nodes may send data in each cycle in sequence. It may be understood that each slot is allowed to be used by only a corresponding node. For example, the slot 1 is allowed to be used by only the node 1, and only the node 1 may send or receive data in the slot 1.

However, the foregoing manner 1 is not applicable to most low-latency scenarios. For example, for a home network, neighbors cannot be required to use devices that are provided by a same vendor. Therefore, implementation is relatively difficult because all devices need to be provided by a same vendor.

### Manner 2:

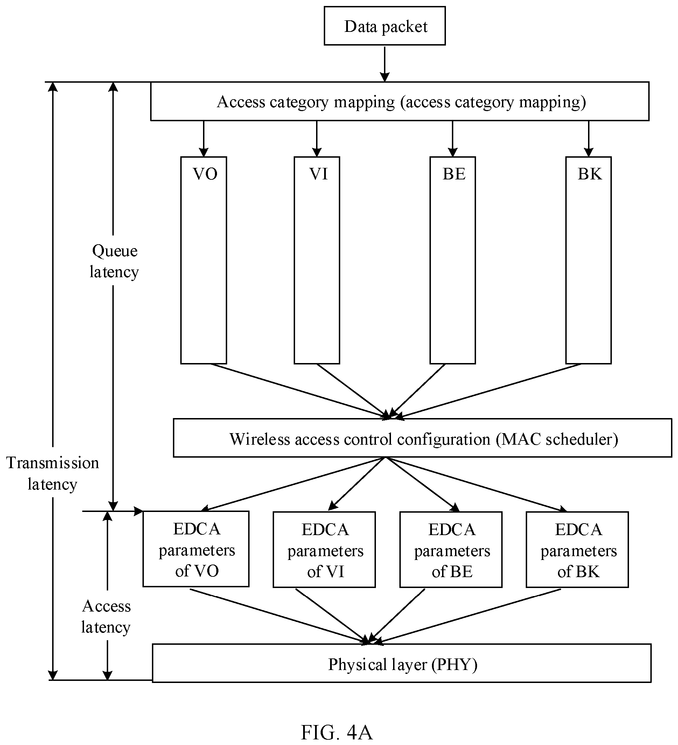

Refer to FIG. 4A. A concept of enhanced distributed channel access (enhanced distributed channel access, EDCA) is introduced in 802.11e. Based on EDCA, packets from an upper layer are classified into four types of service packets: background (background, BK), best effort (best effort, BE), video (video, VI), and voice (voice, VO). For each service packet, a set of EDCA parameters are defined, as shown in Table 1.

**Table 1: Example of EDCA parameters**

| Parameter name | Parameter meaning |
|---|---|
| Arbitration interframe space number (arbitration interframe space number, AIFSN) | Different idle waiting times may be configured for different service packets. |
| | AIFS = AIFSN × aSlotTime + aSIFSTime. |
| | That is, a larger AIFSN leads to a longer idle waiting time and a longer latency. |
| Minimum contention window (ECWmin)/Maximum contention window (ECWmax) | The two values determine a backoff (backoff) window value. |
| Transmission opportunity (TXOPLimit) | Determines a maximum time that an air interface may be occupied after channel contention succeeds. |

The EDCA parameters determine a probability of occupying a channel by each type of service packet, and may ensure that a high-priority service packet has a greater opportunity of occupying a channel than a low-priority service packet. Channel contention priorities of various service packets may be adjusted by adjusting and controlling the EDCA parameters of each service packet, to adjust latencies and throughput performance of different services.

In standard cases, the AIFSN is greater than or equal to 2. That is, random backoff can be started only after waiting in a queue for at least the AIFSN that is equal to a distributed interframe space (distributed interframe space, DIFS). DIFS = 2 × Duration of one slot (9 microseconds) + Duration of one short interframe space (16 microseconds). When a background service packet arrives at a background STA, a service packet is being sent on an air interface, that is, a current channel state is busy. In this case, for sending of the background STA, random backoff can be started only after the current service packet ends and duration in which a channel is idle reaches at least the DIFS = 34 microseconds (µs). After the random backoff ends, the background STA may send the background service packet.

A normal frame sequence space is a short interframe space (short interframe space, SIFS). Therefore, the AIFSN is usually not set to 0. If the AIFSN is set to 0, a service packet always collides with a frame sequence. Therefore, an extreme configuration of EDCA is that the AIFSN is set to 1, and a node does not perform random backoff. That is, when determining that duration in which a channel is idle reaches a point interframe space PIFS, the node sends a service packet. A purpose of preemption using the PIFS is to preempt a channel more quickly than other nodes, thereby reducing impact of an access latency.

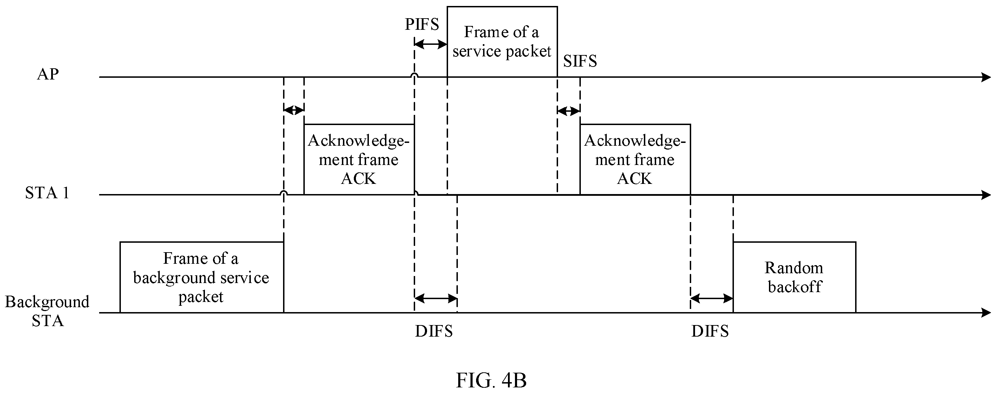

Refer to FIG. 4B. When a low-latency service reaches an AP, the AP performs channel listening. Because a background STA is sending a background service packet, a channel state is "busy". The AP continues to perform channel listening. After determining that duration in which a channel is idle reaches the PIFS, the AP may send a service packet of the low-latency service. It may be understood that, when the background STA sends a background service packet again, the background STA needs to perform random backoff after waiting for the DIFS in which the channel is idle. The background service packet can be sent only after the random backoff ends. However, because PIFS < DIFS, that is, waiting duration of the AP is less than waiting duration of the background STA, the AP may first preempt the channel, and send a data packet of the low-latency service without a collision.

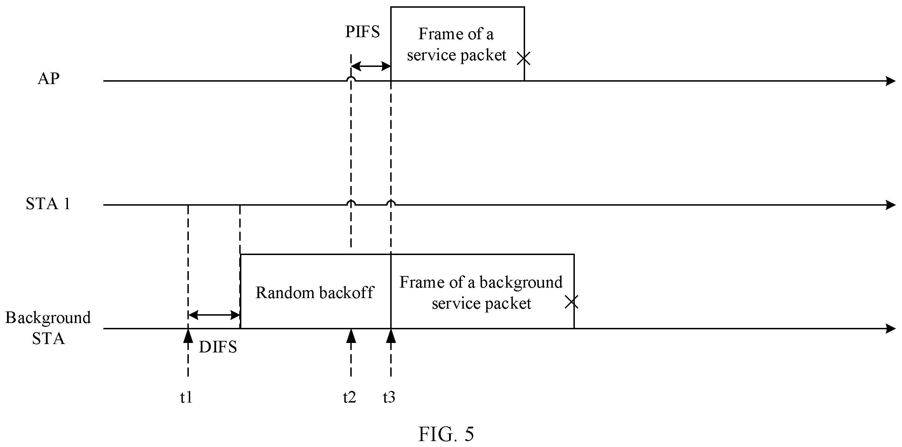

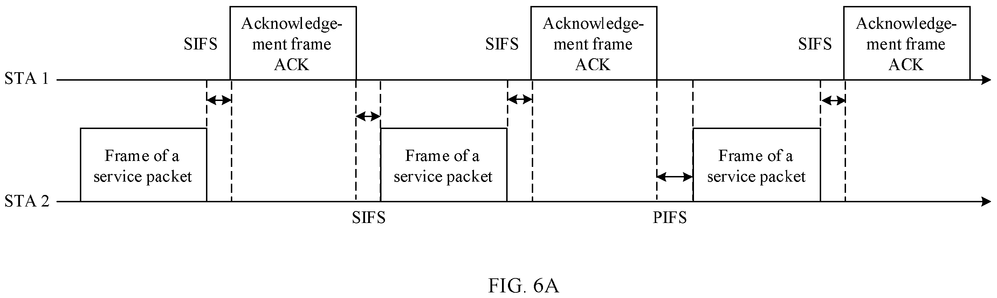

Although a PIFS waiting time is short and the AP may preferentially access the channel, the following two possible collisions may still occur:
(1) When a low-latency service arrives, the AP performs channel listening and determines that the channel state is idle. At the same time, another node is performing random backoff, and remaining backoff duration is exactly three slots that are close to the PIFS. In this case, a packet loss may occur due to a collision. Refer to FIG. 5. The low-latency service arrives at the AP at a moment t2, and the AP may determine, through channel listening, that the channel is idle. Therefore, after determining that duration in which the channel is idle reaches the PIFS, the AP may send a data packet of the low-latency service at a moment t3. However, because a background service packet arrives at the background STA at a moment t1, the background STA may perform random backoff after the duration in which the channel is idle reaches the DIFS. At the moment t2, remaining backoff duration is three slots that are close to the PIFS. At the moment t3, the random backoff ends, and the background STA sends the background service packet. It may be learned from FIG. 5 that the data packet of the low-latency service collides with the background service packet. Therefore, the data packet of the low-latency service and the background service packet may be lost.
(2) Some terminals do not comply with a constraint of a transmission opportunity (transmission opportunity, TXOP) limit (limit). These terminals continuously occupy the air interface when sending service packets. Therefore, these terminals are referred to as greedy terminals. Refer to FIG. 6A. A greedy terminal has a characteristic of continuous bursts (bursts), and each burst usually lasts for 10 ms or even longer. Service packets in a burst are sent at an interval of the SIFS. A space between bursts is sometimes the PIFS.

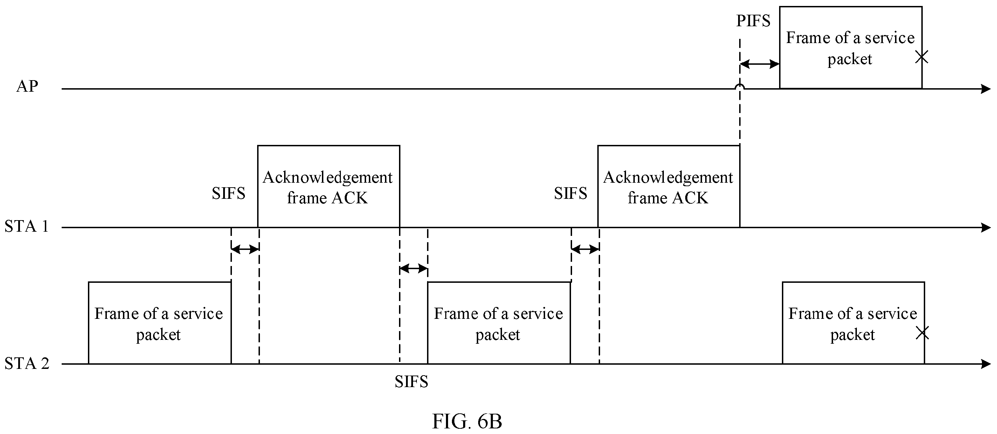

When the AP sends a service packet of a high-priority service with the extreme configuration, for example, a low-latency service, the service packet is very prone to collide with a burst of the greedy terminal. Refer to FIG. 6B. A space between service packets in a burst is the SIFS, and SIFS < PIFS. Therefore, the service packet of the low-latency service cannot preempt the channel. After a burst of the greedy terminal ends, the greedy terminal sends a next burst at an interval of the PIFS. At this time, the AP also performs preemption by using the PIFS, and a collision occurs.

Therefore, it may be learned that even if the PIFS with the extreme configuration is used to preempt the channel, problems of a collision and long-time occupation of the channel cannot be avoided.

In view of this, embodiments of this application provide a data transmission method. In the method, a first device may send a first frame without performing channel listening. When detecting that a channel state is idle, the first device may send a second frame after waiting for first duration. In this solution, the first frame may be used to detect or preempt a channel. When data is transmitted on the channel, the first frame may interrupt the data transmission, and protect the second frame of a low-latency service, so that a frame loss caused by a collision of the second frame is reduced or avoided.

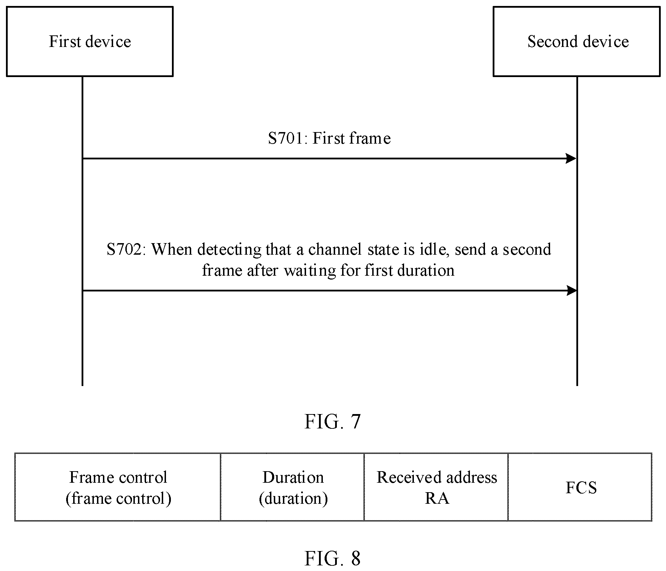

FIG. 7 is an example flowchart of a data transmission method according to an embodiment of this application. The following operations may be included.

S701: A first device sends a first frame to a second device.

As described above, the first device does not need to perform channel listening when sending the first frame. In other words, the first device may send the first frame without determining whether a channel is idle. Optionally, the first device may perform channel listening when sending the first frame. For example, the first device may detect, through CCA, whether a channel state is idle. The first device may send the first frame when the channel state is idle. For example, the first device may send the first frame when duration in which the channel is idle reaches specified duration. The specified duration may be set to be less than a PIFS, for example, less than or equal to 25 microseconds, or the specified duration may be an SIFS, for example, 16 microseconds.

It may be understood that the first device may not send the first frame when the channel state is not idle.

In a possible implementation, the first frame may not need to be replied with an acknowledgement frame. For example, the first frame may be a control frame, for example, a clear to send (clear to send, CTS) frame. FIG. 8 is a diagram of a structure of a possible first frame according to an embodiment of this application. As shown in FIG. 8, the first frame may be a CTS frame. The first frame may include a frame control (frame control) field, a duration (duration) field, a received address (received address, RA) field, and a frame check sequence (frame check sequence, FCS) field. When the first frame is a control frame, the first frame may not need to be replied with an acknowledgement frame. Therefore, the first device may preempt the channel by sending a control frame to the second device.

Optionally, a received address in the first frame may indicate an address of the first device, for example, a MAC address of the first device, or indicate an address of the second device, for example, a MAC address of the second device. For example, the RA field in FIG. 8 may indicate the address of the first device or the address of the second device.

It may be understood that the CTS frame shown in FIG. 8 is merely used as an implementation of the first frame, and is not used as a limitation on the first frame. Alternatively, the first frame may be another control frame that does not need to be replied with an acknowledgement frame.

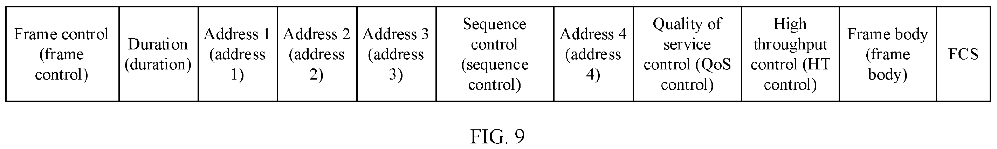

For another example, the first frame may be a data frame. The data frame may include an acknowledgement frame indicator field (ACK policy), and the acknowledgement frame indicator field may indicate that there is no need to reply with an acknowledgement frame. FIG. 9 is a diagram of a structure of a possible first frame according to an embodiment of this application. As shown in FIG. 9, the first frame may include a frame control field, a duration field, an address 1 (address 1) field, an address 2 (address 2) field, an address 3 (address 3) field, a sequence control (sequence control) field, an address 4 (address 4) field, a quality of service (quality of service, QoS) control (control) field, a high throughput control (HT control) field, a frame body (frame body) field, and an FCS field.

In the data frame shown in FIG. 9, the QoS control field may include an acknowledgement frame indicator field, which may indicate that the first frame does not need to be replied with an acknowledgement frame. For example, the acknowledgement frame indicator field may be 1-bit information. When a value of the acknowledgement frame indicator field is 1, it indicates that the first frame needs to be replied with an acknowledgement frame; and when the value of the acknowledgement frame indicator field is 0, it indicates that the first frame does not need to be replied with an acknowledgement frame. Alternatively, when the value of the acknowledgement frame indicator field is 0, it indicates that the first frame needs to be replied with an acknowledgement frame; and when the value of the acknowledgement frame indicator field is 1, it indicates that the first frame does not need to be replied with an acknowledgement frame.

Optionally, a received address in the first frame may indicate an address of the first device, for example, a MAC address of the first device, or indicate an address of the second device, for example, a MAC address of the second device. For example, the address 4 (address 4) field in FIG. 9 may indicate the address of the first device or the address of the second device.

It may be understood that the data frame shown in FIG. 9 is merely used as an implementation of the first frame, and is not used as a limitation on the first frame. Alternatively, the first frame may be another data frame that does not need to be replied with an acknowledgement frame.

The first frame in this embodiment of this application may be one frame, or may be a frame sequence. The frame sequence may include a plurality of frames.

S702: When detecting that a channel state is idle, the first device sends a second frame after waiting for first duration.

The second frame in this embodiment of this application may be one frame, or may be a frame sequence. The frame sequence may include a plurality of frames. Optionally, the first device may detect, through CCA, whether the channel state is idle.

The second frame described above may be a data frame, that is, a data frame of a service of the first device, for example, a data frame of a low-latency service. The first duration may be predefined in a protocol or preconfigured, and is not specifically limited in this application. For example, the first duration may be set to be less than or equal to the PIFS, for example, less than or equal to 25 microseconds, or the first duration may be set to the SIFS, for example, 16 microseconds.

In S702, the first device may perform channel listening, and send the second frame after determining that the duration in which the channel is idle reaches the first duration. It may be understood that a manner in which the first device performs channel listening is not limited in this embodiment of this application.

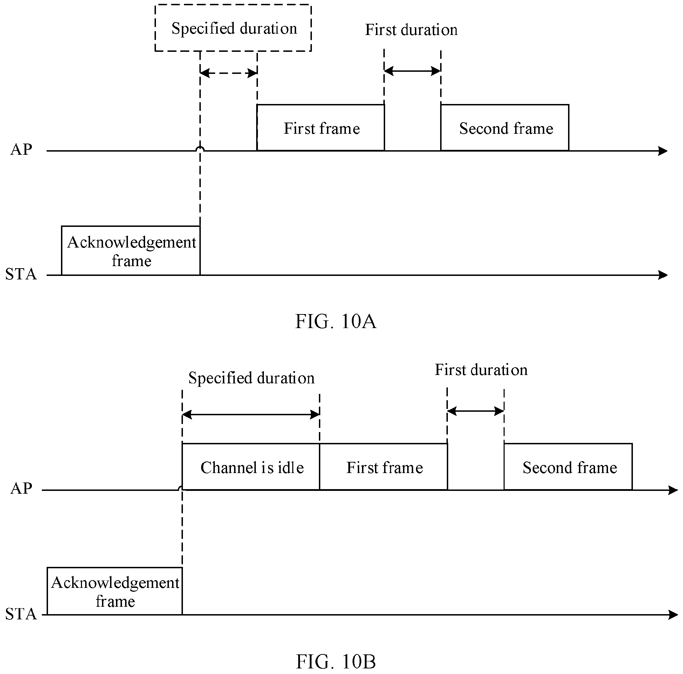

FIG. 10A is a scenario diagram of a data transmission method according to an embodiment of this application. As shown in FIG. 10A, an AP may send a first frame without performing channel listening. After sending the first frame, the AP may perform channel listening, and send a second frame after duration in which a channel is idle reaches first duration.

Optionally, after a service such as a low-latency service arrives at the AP, the AP may send the first frame after waiting for specified duration, as shown in FIG. 10A. It may be understood that the specified duration may be predefined in a protocol or preconfigured. For example, the specified duration may be set to be less than or equal to the PIFS, for example, less than or equal to 25 microseconds, or the specified duration may be set to the SIFS, for example, 16 microseconds, or the specified duration may be set to 0 microseconds.

Based on the foregoing solution, the first device does not need to perform channel listening when sending the first frame. Therefore, the first device may preempt the channel. When the channel state is idle, the first device may send the second frame after waiting for the first duration. Therefore, the first device may avoid a collision of the second frame, and reduce or avoid a loss of the second frame. When data is transmitted on the channel, the first frame may interrupt the data transmission, and protect the second frame of a low-latency service, so that a frame loss caused by a collision of the second frame is reduced or avoided.

FIG. 10B is a diagram of a data transmission method according to an embodiment of this application. As shown in FIG. 10B, an AP may perform channel listening, and send a first frame after a channel remains idle for specified duration. After sending the first frame, the AP may perform channel listening, and send a second frame after duration in which a channel is idle reaches first duration.

Optionally, after a service such as a low-latency service arrives at the AP, the AP may send the first frame after waiting for specified duration, as shown in FIG. 10B. It may be understood that the specified duration may be predefined in a protocol or preconfigured. For example, the specified duration may be set to be less than or equal to the PIFS, for example, less than or equal to 25 microseconds, or the specified duration may be set to the SIFS, for example, 16 microseconds, or the specified duration may be set to 0 microseconds.

Based on the foregoing solution, the first device sends the first frame when the channel state is idle, and therefore may preempt the idle channel. When the channel state is idle, the first device may send the second frame after waiting for the first duration. In this way, the first device may avoid a collision of the second frame, and reduce or avoid a loss of the second frame. When data is transmitted on the channel, the first frame may interrupt the data transmission, and protect the second frame of a low-latency service, so that a frame loss caused by a collision of the second frame is reduced or avoided.

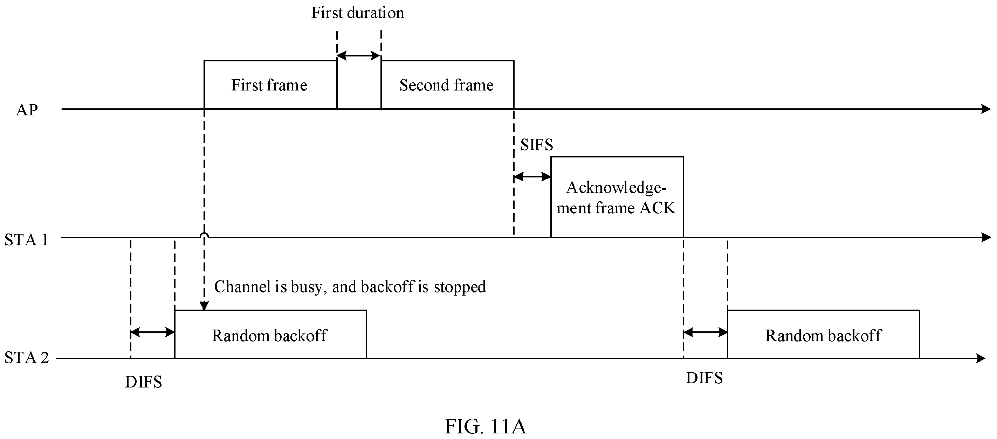

In a possible case, the first frame may implement fast channel preemption. Refer to FIG. 11A. An AP may send a first frame. For example, after a low-latency service arrives at the AP, the AP may send the first frame. Optionally, the AP may send the first frame after waiting for specified duration (XIFS). It may be learned from FIG. 11A that a node other than the AP does not transmit data, that is, a channel state is idle. The AP may perform channel listening after sending the first frame. When detecting that the channel state is idle, the AP may send a second frame, for example, a service packet of a low-latency service, after waiting for first duration. Optionally, a STA 1 may receive the second frame from the AP, and send an acknowledgement frame (acknowledgement, ACK) for the second frame to the AP after an SIFS.

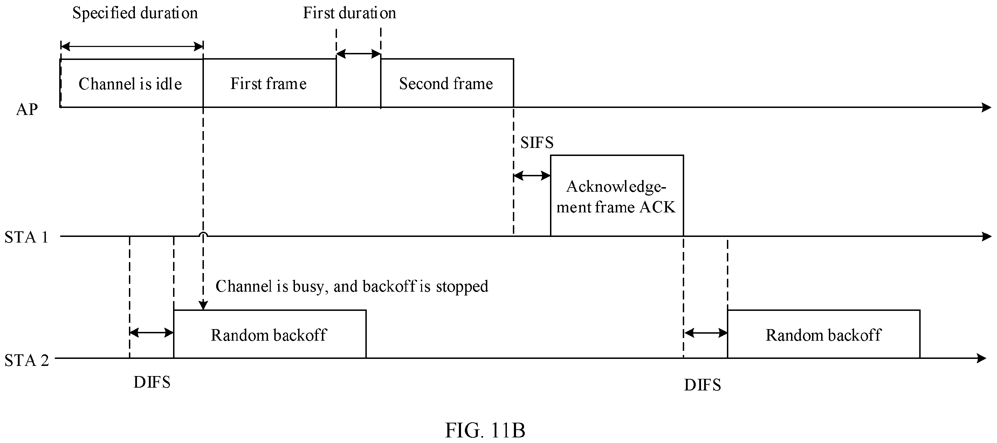

Refer to FIG. 11B. An AP may send a first frame. For example, the AP may send the first frame when determining that a channel state is idle. Optionally, the AP may send the first frame when duration in which a channel is idle reaches specified duration. The AP may perform channel listening after sending the first frame. When detecting that the channel state is idle, the AP may send a second frame, for example, a service packet of a low-latency service, after waiting for first duration. Optionally, a STA 1 may receive the second frame from the AP, and send an ACK for the second frame to the AP after an SIFS.

It may be understood that, in FIG. 11A and FIG. 11B, because when the AP sends the first frame, the background STA 1 determines that the channel state is busy, the background STA 1 does not perform random backoff, and waits for the channel state to become idle before performing random backoff. For example, the background STA 1 detects, at a moment t1, that the channel state is idle. Therefore, the background STA may perform random backoff after waiting for a DIFS in which the channel is idle. At a moment t2, the background STA 1 completes random backoff, a random backoff count value is 0, and the background STA 1 may send a background service packet. A background STA 2 may receive the background service packet from the background STA 1, and send an acknowledgement frame for the background service packet to the background STA 2 after an SIFS.

It may be learned from FIG. 11A that the AP may send the first frame without performing channel listening, and may first preempt the channel when the channel is idle. When detecting that the channel state is idle, the AP may send the second frame after waiting for second duration. Therefore, a collision of the second frame may be reduced or avoided, and reliable transmission of the second frame may be implemented.

It may be learned from FIG. 11B that the AP may send the first frame when the channel state is idle, and may first preempt the channel when the channel is idle. When detecting that the channel state is idle, the AP may send the second frame after waiting for second duration. Therefore, a collision of the second frame may be reduced or avoided, and reliable transmission of the second frame may be implemented.

Optionally, to protect the reliable transmission of the second frame, the first frame may include a first duration (duration) field. The first duration field may indicate second duration, and the second frame may be sent within the second duration. For example, as shown in FIG. 9, the second duration may be indicated in the duration field. A start time of the second duration may be a start time of the first frame, and an end time of the second duration may be a start time of the second frame.

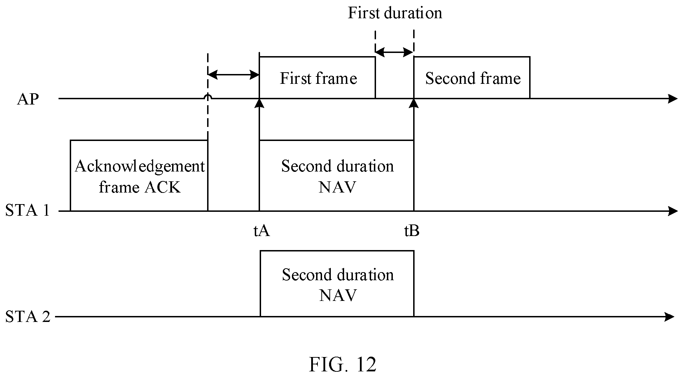

FIG. 12 is a scenario diagram of data transmission according to an embodiment of this application. An AP may send a first frame. For example, after a low-latency service arrives at the AP, the AP may send the first frame. Optionally, the AP may send the first frame after waiting for specified duration (XIFS). For another example, the AP may send the first frame when determining that a channel state is idle. Optionally, the AP may send the first frame when duration in which a channel is idle reaches specified duration. The first frame may include a duration (duration) field, and the duration (duration) field indicates second duration, for example, duration between tA and tB shown in FIG. 12. It may be understood that, because a received address in the first frame is an address of a STA 3, STAs other than the STA 3, such as a background STA 1 and a background STA 2, cannot access the channel within the second duration. For example, the background STA 1 receives the first frame, and determines that the received address in the first frame is not a received address of the background STA 1, and the duration (duration) field in the first frame indicates the second duration, that is, the duration between tA and tB. Therefore, the background STA 1 cannot access the channel within the second duration, that is, the background STA 1 cannot send a service packet within the second duration. Similarly, the background STA 2 cannot access the channel within the second duration. When detecting that the channel state is idle, the AP may send a second frame, for example, a service packet of a low-latency service, at a moment tB after waiting for first duration.

It may be learned from FIG. 12 that the first frame may indicate the second duration by using the first duration (duration) field, and nodes other than a node indicated by the received address cannot access the channel within the second duration. Therefore, reliability of the second frame may be improved, and a possibility of a collision of the second frame may be reduced.

In another possible case, assuming that a service packet is transmitted on an air interface, that is, when a channel state is busy, the first frame may interrupt the transmission of the service packet on the air interface. A greedy terminal is used as an example for description.

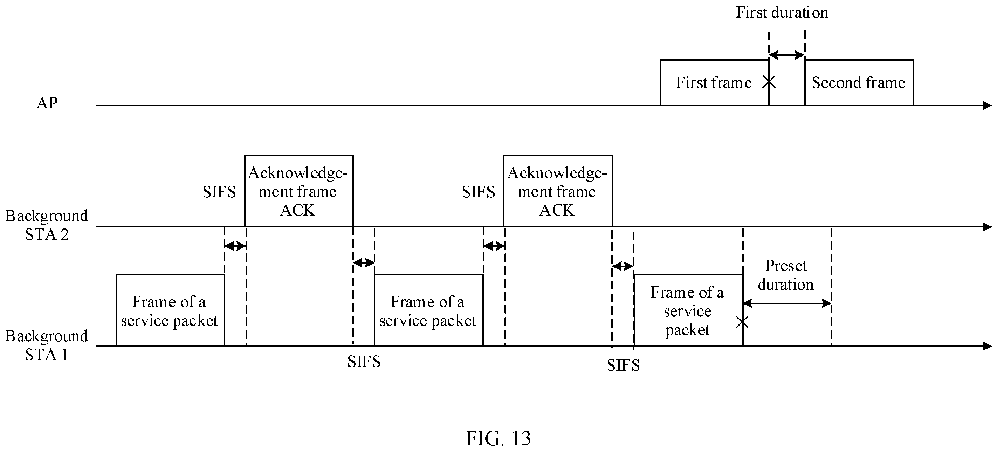

FIG. 13 is a scenario diagram of a data transmission method according to an embodiment of this application. It may be learned from FIG. 13 that a background STA 1 may send frames based on a characteristic of a burst sequence. An AP may send a first frame. Optionally, the AP may send the first frame after waiting for specified duration (XIFS). The AP does not need to perform channel listening when sending the first frame. It may be learned from FIG. 13 that the first frame collides with a frame of the background STA 1. Therefore, a background STA 2 cannot receive the frame from the background STA 1, and therefore the background STA 2 does not send an acknowledgement frame to the background STA 1. Therefore, the background STA 1 does not receive an acknowledgement frame from the AP. If the background STA does not receive the acknowledgement frame within preset duration, the background STA considers that waiting for the acknowledgement frame times out. Therefore, the background STA performs random backoff again, and retransmits the frame on which the collision occurs. When the background STA waits for the acknowledgement frame, the AP detects that a channel state is idle. Therefore, the AP may send a second frame after waiting for first duration in which a channel is idle.

It should be noted that the preset duration may be predefined in a protocol or preconfigured. For example, the preset duration may be set to 50 microseconds. It may be understood that, when the AP sends the first frame without performing channel listening, transmission of a service packet on an air interface may be interrupted, as shown in FIG. 13. If the AP performs channel listening and sends the first frame when the channel state is idle, the first frame cannot interrupt the transmission of the service packet on the air interface.

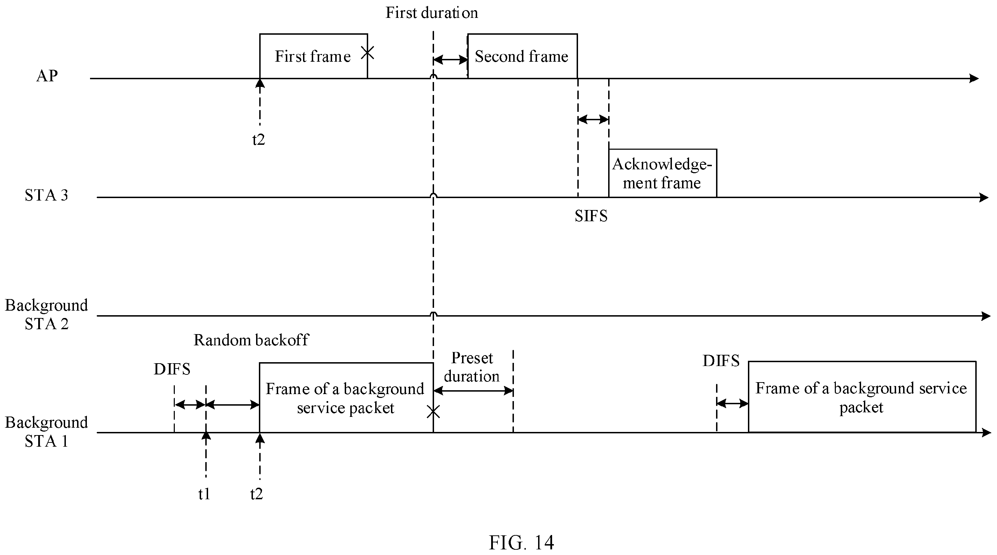

The embodiment shown in FIG. 13 is described by using an example in which the first frame interrupts a service packet of a greedy terminal. The first frame provided in this embodiment of this application may not only interrupt a service packet of a greedy terminal, but also interrupt a service packet of another node. FIG. 14 is a scenario diagram of a data transmission method according to an embodiment of this application.

A background STA 1 performs channel listening, and determines that a channel state is idle. Therefore, the background STA 1 may send a background service packet at a moment t2 after performing random backoff at a moment t1 after duration in which a channel is idle reaches a DIFS. An AP sends a first frame at the moment t2. That is, the first frame collides with the background service packet sent by the background STA 1. Therefore, a background STA 2 cannot accurately receive the background service packet from the background STA 1, and does not send an acknowledgement frame to the background STA 1. Therefore, after waiting for an acknowledgement frame times out, the background STA 1 performs random backoff again to access the channel. In a time in which the background STA 1 waits for the acknowledgement frame, the AP may perform channel listening. Because no data is transmitted on the channel, the AP may determine that the channel state is idle. The AP may send a second frame after waiting for first duration. Optionally, a STA 3 may receive the second frame from the AP, and send an acknowledgement frame for the second frame to the AP after an SIFS.

After the STA 3 sends the acknowledgement frame to the AP, the background STA 1 may detect that the channel state is idle. Therefore, the background STA 1 may perform random backoff after the duration in which the channel is idle reaches the DIFS. At a moment t3, the random backoff is completed, and the interrupted background service packet is retransmitted. In the embodiment shown in FIG. 14, regardless of whether the first device performs channel listening before sending the first frame, transmission of a service packet on an air interface can be interrupted, and a channel can be preempted.

It may be learned from FIG. 13 and FIG. 14 that the AP may use the first frame to interrupt transmission of a service packet on an air interface. After the first frame collides with the service packet on the air interface, a transmit end and a receive end consider that a frame that is currently being exchanged is lost. Therefore, the transmit end performs random backoff again and accesses the channel. Therefore, the AP may gain a sending opportunity for the subsequent second frame by using the first frame.

In the embodiments shown in FIG. 7 and FIG. 8, the second device may send an acknowledgement frame for the second frame to the first device. Optionally, the second device may alternatively send a fourth frame to the first device. In a possible case, the second frame may include a second duration (duration) field (the duration field shown in FIG. 9). The second duration field may indicate third duration, and the fourth frame may be sent within the third duration. The fourth frame described above may be understood as a service packet sent by the second device to the second device.

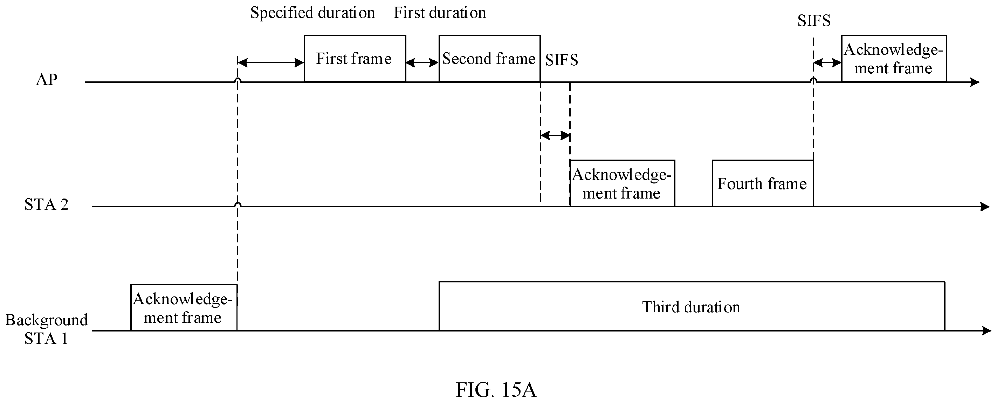

FIG. 15A is a scenario diagram of a data transmission method according to an embodiment of this application. An AP may send a first frame. For example, after a low-latency service arrives at the AP, the AP may send the first frame. Optionally, the AP may send the first frame after waiting for specified duration (XIFS). The AP may perform channel listening after sending the first frame. When detecting that a channel state is idle, the AP may send a second frame, for example, a service packet of a low-latency service, after waiting for first duration. The second frame may include a second duration (duration) field. The second duration field may indicate third duration. It may be understood that, because a received address in the second frame is an address of a receive end of the second frame, for example, an address of a STA 2, nodes other than the STA 2, such as a background STA, cannot access a channel within the third duration. For example, a background STA 1 receives the second frame, and determines that the received address in the second frame is not a received address of the background STA 1, and the duration (duration) field in the second frame indicates the third duration. Therefore, the background STA 1 cannot access the channel within the third duration, that is, the background STA 1 cannot send a service packet within the third duration.

A STA 3 may send a fourth frame, for example, a service packet of an uplink service, to the AP within the third duration. Optionally, the STA 3 may alternatively send an acknowledgement frame to the AP within the third duration.

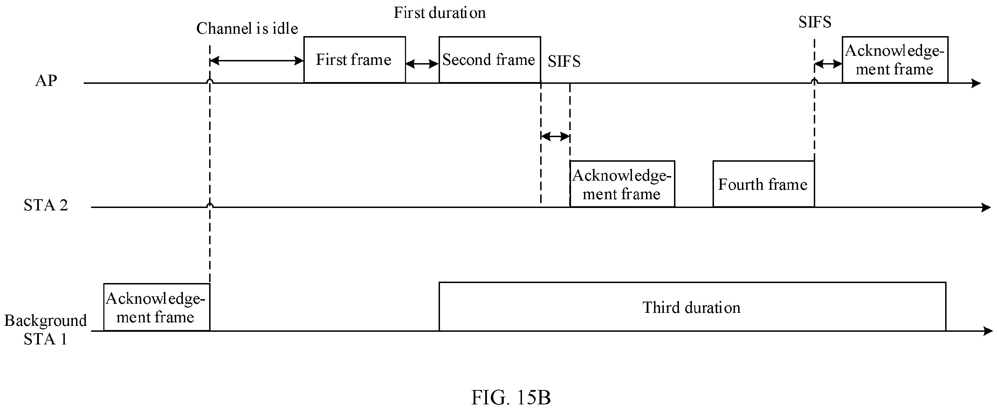

FIG. 15B is a scenario diagram of a data transmission method according to an embodiment of this application. An AP may send a first frame. For example, after a low-latency service arrives at the AP, the AP may perform channel listening, and send the first frame when a channel state is idle. Optionally, the AP may send the first frame when duration in which a channel is idle reaches specified duration. The AP may perform channel listening after sending the first frame. When detecting that the channel state is idle, the AP may send a second frame, for example, a service packet of a low-latency service, after waiting for first duration. The second frame may include a second duration (duration) field. The second duration field may indicate third duration. It may be understood that, because a received address in the second frame is an address of a receive end of the second frame, for example, an address of a STA 2, nodes other than the STA 2, such as a background STA, cannot access a channel within the third duration. For example, a background STA 1 receives the second frame, and determines that the received address in the second frame is not a received address of the background STA 1, and the duration (duration) field in the second frame indicates the third duration. Therefore, the background STA 1 cannot access the channel within the third duration, that is, the background STA 1 cannot send a service packet within the third duration.

A STA 3 may send a fourth frame, for example, a service packet of an uplink service, to the AP within the third duration. Optionally, the STA 3 may alternatively send an acknowledgement frame to the AP within the third duration.

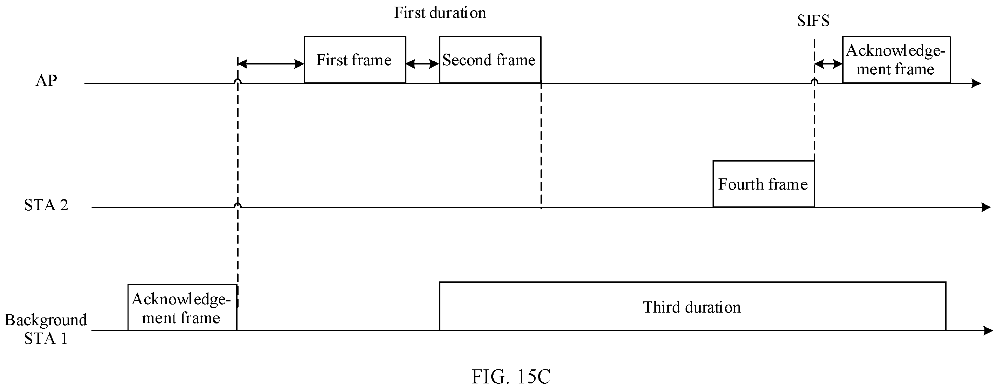

It may be understood that the second frame may alternatively not need to be replied with an acknowledgement frame, as shown in FIG. 15C.

It may be learned from FIG. 15A to FIG. 15C that the second duration field in the second frame may indicate the third duration, and the STA 3 may send a service packet to the AP within the third duration, so that the channel is reserved, and a possibility of a collision of the fourth frame is reduced.

It should be noted that the STAs in FIG. 10A to FIG. 15C, such as the background STA 1, the background STA 2, and the STA 3, may be STAs associated with an AP in a local cell, or may be STAs associated with an AP in an intra-frequency neighboring cell. In addition, the APs, the STAs, and the background STAs shown in FIG. 10A to FIG. 15C are merely shown as examples. Without loss of generality, the data transmission method provided in this embodiment of this application may be applied to any Wi-Fi device.

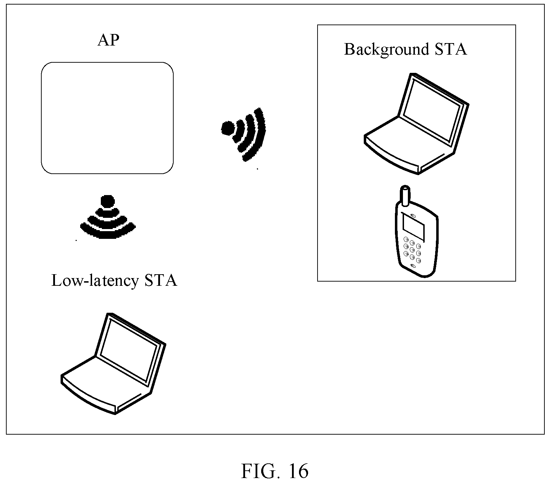

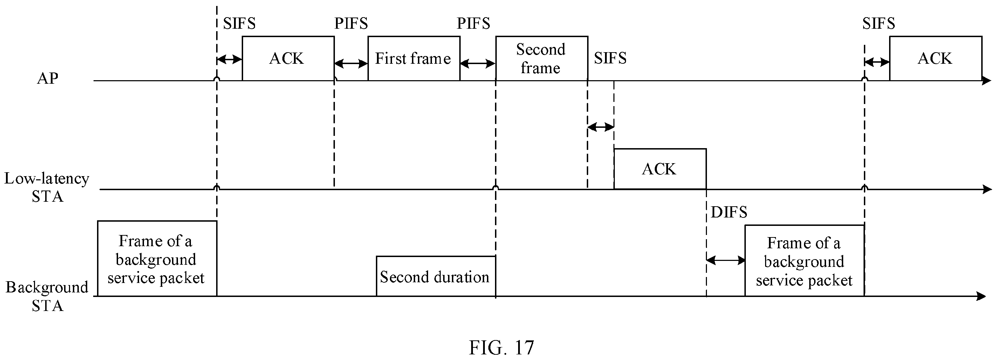

With reference to accompanying drawings, the following describes in detail technical solutions provided in embodiments of this application. Refer to FIG. 16. There is an AP in a local cell, and the AP is associated with a low-latency service receive end (a low-latency STA) and a background STA. In the following, an example in which first duration is a PIFS and specified duration is the PIFS is used for description. In the following embodiments shown in FIG. 17 to FIG. 21, both a background STA and a low-latency STA are associated with an AP in a local cell.

Refer to FIG. 17. A background STA 1 is sending a background service packet on a channel. In this case, for service packets of an AP and the background STA, timing can be started only after transmission of the current background service packet ends, that is, the AP sends an ACK frame for the background service packet to the background STA. According to a standard, only after waiting for at least a DIFS = 34 µs in which the channel is idle, the background STA can start random backoff and then send a frame. Optionally, after determining that duration in which the channel is idle reaches DIFS duration, the background STA may not perform random backoff to send a frame. However, the AP may send a first frame after waiting for a PIFS, or the AP may perform channel listening and send a first frame after the duration in which the channel is idle reaches a PIFS, where PIFS < DIFS. Therefore, waiting duration of the AP is less than waiting duration of the background STA. Therefore, the AP may send the first frame before the background STA.

In an example, the first frame may include a first duration field, and the first duration field indicates second duration. When detecting that a channel state is idle, the AP may send a second frame after waiting for the PIFS.

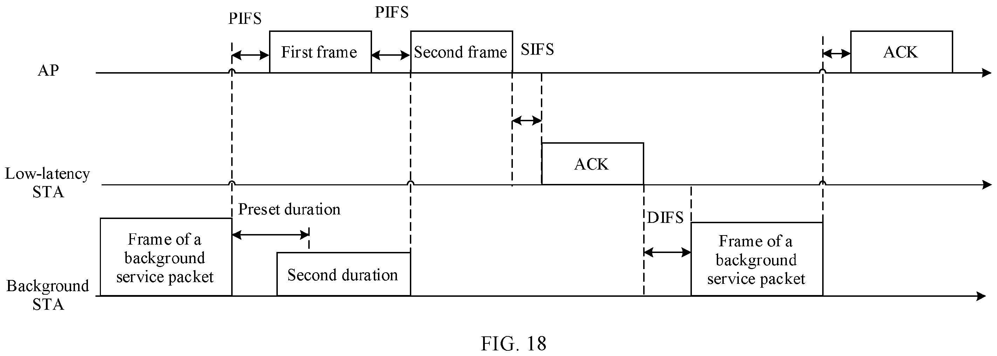

Optionally, in the embodiment shown in FIG. 17, the AP may not send an ACK to the background STA. Refer to FIG. 18. After receiving a frame from a background STA, an AP does not send an ACK to the background STA, and sends a first frame after waiting for a PIFS, or performs channel listening and sends a first frame after duration in which a channel is idle reaches a PIFS. Because the background STA does not receive an ACK from the AP, the background STA may consider that the frame is lost. Therefore, after waiting for the ACK times out, the background STA performs random backoff again to access the channel. However, the AP may preempt the channel by using the first frame, and reserve a time window for a second frame by using a first duration field, to reduce a possibility of a collision of the second frame.

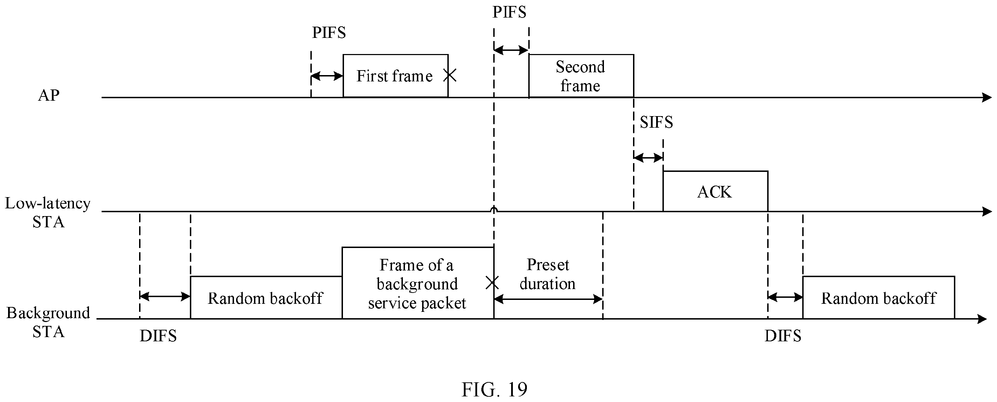

Refer to FIG. 19. An AP sends a first frame. If a background STA just completes random backoff at this time, or a background STA 1 determines that duration in which a channel is idle just reaches a DIFS, the background STA sends a frame. Therefore, the first frame collides with the frame sent by the background STA. Wi-Fi is a time division duplex (time division duplex, TDD) system, and transmit and receive modes are not enabled at the same time. Therefore, when sending the first frame, the AP cannot receive the frame from the background STA, and therefore does not send an ACK to the background STA. After waiting for an ACK times out, the background STA performs random backoff again to retransmit the frame on which the collision occurs. After detecting that the channel is idle, the AP may send a second frame of a low-latency service after waiting for a PIFS. Based on the embodiments shown in FIG. 17 to FIG. 19, the AP may reduce a collision probability of single transmission by using the first frame, and may protect the second frame by sacrificing the first frame or using the first duration field in the first frame, thereby ensuring transmission of a low-latency service.

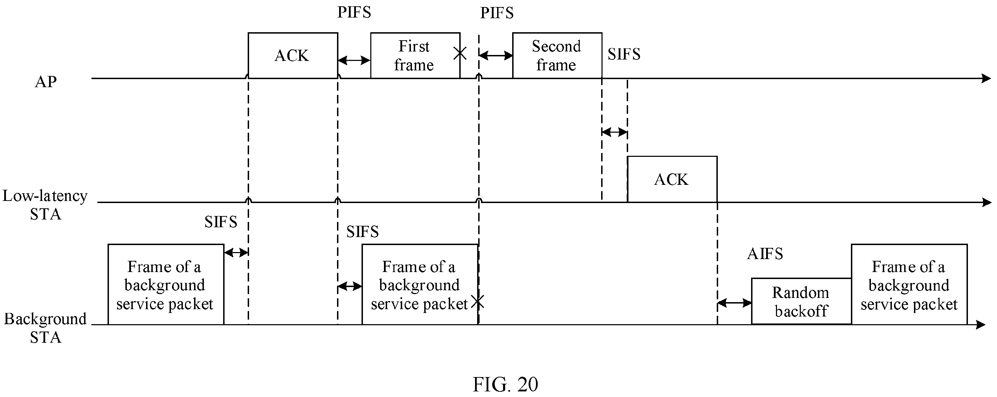

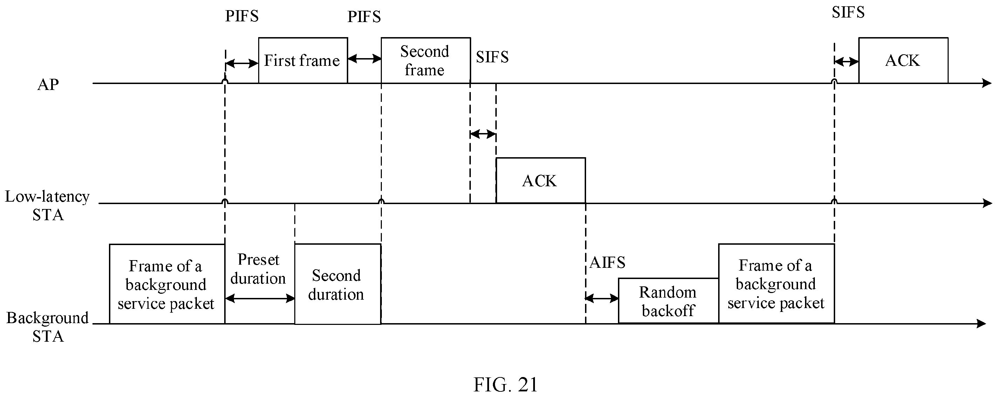

FIG. 17 to FIG. 19 show a scenario in which a background STA associated with an AP in a local cell is a standard STA that complies with a protocol. With reference to FIG. 20 and FIG. 21, the following describes a scenario in which an AP interrupts a burst of a greedy terminal based on a first frame when a background STA associated with an AP in a local cell is a greedy terminal.

Refer to FIG. 20. After receiving a background service packet from a background STA, an AP may send an ACK to the background STA. The AP may send a first frame after waiting for a PIFS. After receiving the ACK from the AP, the background STA sends a background service packet after waiting for an SIFS in which a channel is idle. Because SIFS < PIFS, the first frame collides with the background service packet of the background STA. Wi-Fi is a TDD system, and transmit and receive modes are not enabled at the same time. At this time, the AP is already in a transmit state, and therefore cannot receive the background service packet. Therefore, the AP does not send an ACK to the background STA. In this case, after waiting for an ACK times out, the background STA considers that the background service packet is lost, and retransmits the background service packet. The background STA may perform random backoff after the channel remains idle for an AIFS, and retransmit the background service packet.

The AP performs channel listening after sending the first frame, and sends a second frame after the channel remains idle for the PIFS. Because the PIFS is less than preset duration for which the background STA waits, and waiting duration DIFS of another device is greater than the PIFS, collision-free transmission of the second frame may be ensured. It may be understood that, when the AP sends the first frame without performing channel listening, transmission of a service packet on an air interface may be interrupted, as shown in FIG. 20. If the AP performs channel listening and sends the first frame when a channel state is idle, the first frame cannot interrupt transmission of a greedy terminal.

Optionally, the AP may not send an ACK for a burst sequence. Refer to FIG. 21. After receiving a background service packet from a background STA, an AP does not send an ACK to the background STA. The AP may send a first frame after waiting for a PIFS. Therefore, the AP may preempt a channel by using the first frame. Because the AP does not send an ACK to the background STA, after waiting for an ACK times out, the background STA considers that the background service packet is lost, and retransmits the background service packet.

The first frame includes a first duration field, and the first duration field indicates second duration. Therefore, after receiving the first frame, the background STA remains silent and does not access the channel within the second duration. The AP sends a second frame after the channel remains idle for the PIFS. Because a device other than the AP does not access the channel within the second duration, collision-free transmission of the second frame may be ensured.

Based on the embodiments shown in FIG. 20 and FIG. 21, the AP may reduce a collision probability of single transmission by using the first frame, and may protect the second frame by sacrificing the first frame or using the first duration field in the first frame, thereby ensuring transmission of a low-latency service.

Based on the solutions shown in FIG. 20 and FIG. 21, a problem that a greedy terminal occupies an air interface for a long time and does not release the air interface is avoided, and a burst sequence is interrupted by using the first frame, so that a low-latency service may be sent in a timely manner, thereby reducing a latency. It may be understood that, compared with waiting duration in the solution shown in FIG. 20, waiting duration in the solution shown in FIG. 21 is shorter by a length of one frame, and a latency is shorter.

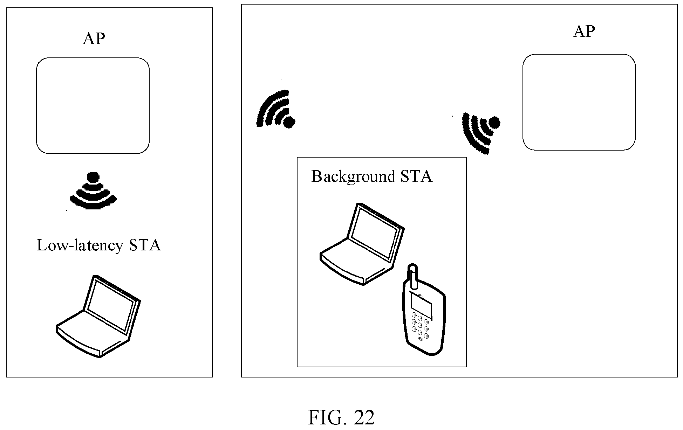

FIG. 16 to FIG. 21 are described by using an example in which a background STA is associated with an AP in a local cell. With reference to FIG. 22 to FIG. 26, the following describes a scenario in which a background STA is associated with an AP in an intra-frequency cell.

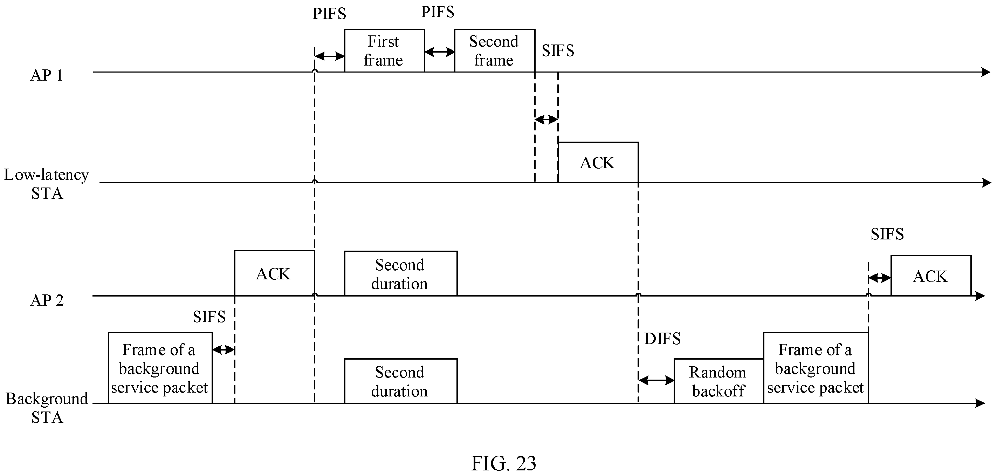

Refer to FIG. 22. There is an AP 1 in a local cell, and the AP 1 is associated with a low-latency service receive end, that is, a low-latency STA. In addition, there is an intra-frequency cell near the local cell, and a background STA is associated with an AP 2 in the intra-frequency cell. In the following, an example in which first duration is a PIFS and specified duration is the PIFS is used for description. In the following embodiments shown in FIG. 23 to FIG. 26, all background STAs are associated with an AP 2 in an intra-frequency cell.

Refer to FIG. 23. A background STA is sending a background service packet on a channel. In this case, for a service packet of an AP 1, timing can be started only after transmission of the current background service packet ends, that is, an AP 2 sends an ACK frame for the background service packet to the background STA. According to a standard, only after waiting for at least a DIFS = 34 µs in which the channel is idle, the background STA can start random backoff and then send a frame. Optionally, after determining that duration in which the channel is idle reaches DIFS duration, the background STA may not perform random backoff to send a frame. However, the AP 1 may send a first frame after waiting for a PIFS, or perform channel listening and send a first frame after the duration in which the channel is idle reaches a PIFS, where PIFS < DIFS. Therefore, waiting duration of the AP 1 is less than waiting duration of the background STA. Therefore, the AP 1 may send the first frame before the background STA.

In an example, the first frame may include a first duration field, and the first duration field indicates second duration. When detecting that a channel state is idle, the AP1 may send a second frame after waiting for the PIFS.

It should be noted that, because the background STA is associated with the AP 2, the AP 1 cannot require the AP 2 not to send an ACK to the background STA.

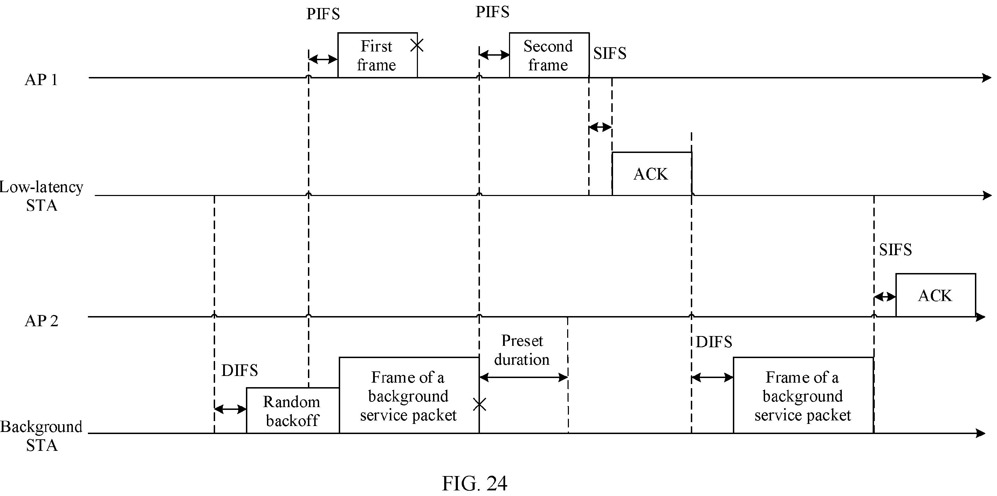

Refer to FIG. 24. An AP 1 sends a first frame at a moment t1. If a background STA just completes random backoff at this time, or a background STA determines that duration in which a channel is idle just reaches a DIFS, the background STA sends a frame. Therefore, the first frame collides with the frame sent by the background STA. This affects channel estimation, scrambling code seed obtaining, data balancing, and the like of the frame sent by the background STA. Consequently, the AP 2 fails to decode the frame of the background STA, and the frame is lost. Therefore, the AP 2 does not send an ACK to the background STA. After waiting for an ACK times out, the background STA performs random backoff again to retransmit the frame on which the collision occurs. After detecting that the channel is idle, the AP 1 may send a second frame of a low-latency service after waiting for a PIFS.

Based on the embodiments shown in FIG. 23 and FIG. 24, the AP 1 may reduce a collision probability of single transmission by using the first frame, and may protect the second frame by sacrificing the first frame or using the first duration field in the first frame, thereby ensuring transmission of a low-latency service.

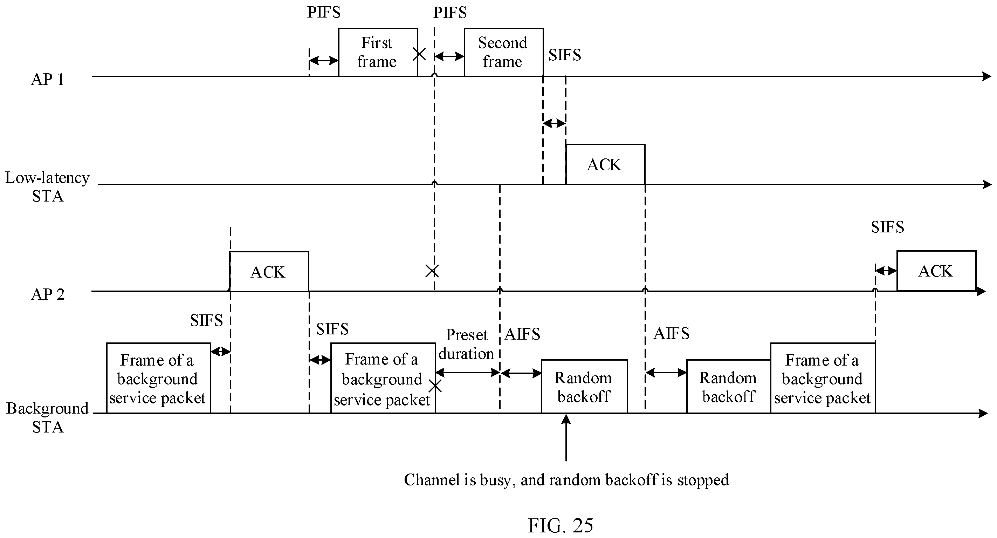

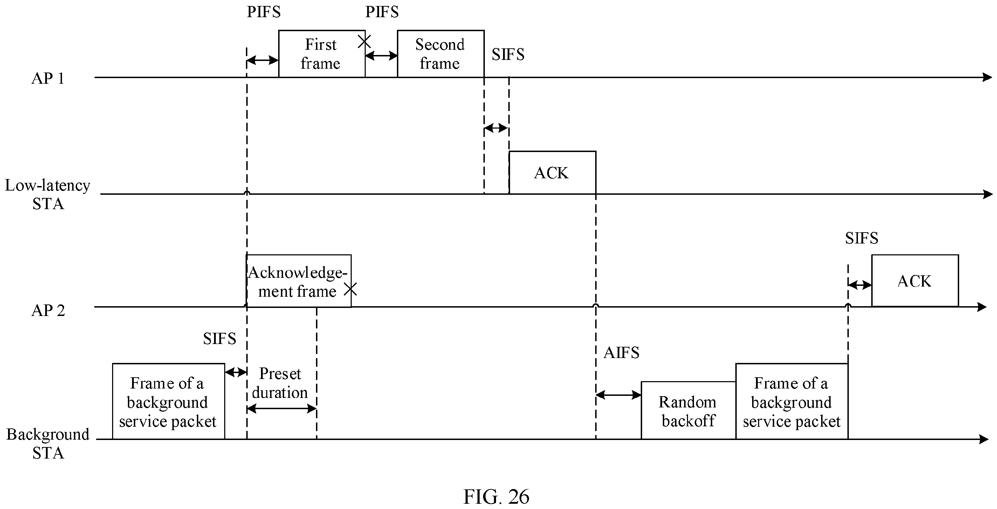

In the embodiments shown in FIG. 23 and FIG. 24, a background STA is a standard STA that complies with a protocol. With reference to FIG. 25 and FIG. 26, the following describes a case in which an AP interrupts a burst of a greedy terminal based on a first frame when a background STA associated with an AP in an intra-frequency neighboring cell is a greedy terminal.

Refer to FIG. 25. An AP 1 performs channel listening, and at this time, a background STA sends a background service packet to an AP 2. After the AP 2 sends an ACK to the background STA, the AP 1 may send a first frame after waiting for a PIFS. After receiving the ACK, the background STA sends a background service packet after waiting for an SIFS in which a channel is idle. Therefore, the first frame collides with the background service packet. This affects channel estimation, scrambling code seed obtaining, data balancing, and the like performed by the AP 2 on the background service packet. Consequently, the AP 2 fails to decode the background service packet, and therefore does not send an ACK to the background STA. In this case, after waiting for an ACK times out, the background STA considers that the background service packet is lost, and retransmits the background service packet. The background STA may perform random backoff after the channel remains idle for an AIFS, and retransmit the background service packet.

The AP 1 performs channel listening after sending the first frame, and sends a second frame after the channel remains idle for the PIFS. Because the PIFS is less than preset duration for which the background STA waits, and waiting duration DIFS of another device is greater than the PIFS, collision-free transmission of the second frame may be ensured.

Optionally, the AP 1 may send the first frame after the background STA sends the background service packet. Refer to FIG. 26. An AP 1 performs channel listening, and at this time, a background STA sends a background service packet to an AP 2. After the background STA sends the background service packet, the AP 1 may send a first frame after waiting for a PIFS. After receiving the background service packet from the background STA, the AP 2 sends an ACK to the background STA. Therefore, the ACK collides with the background service packet. This affects channel estimation, scrambling code seed obtaining, data balancing, and the like performed by the background STA on the ACK. Consequently, the background STA fails to decode the ACK. In this case, the background STA fails to receive the ACK. Therefore, waiting for the ACK by the background STA times out, and the background STA considers that the background service packet is lost, and retransmits the background service packet. The background STA may perform random backoff after the channel remains idle for an AIFS, and retransmit the background service packet.

The AP 1 performs channel listening after sending the first frame, and sends a second frame after the channel remains idle for the PIFS. Because the PIFS is less than preset duration for which the background STA waits, and waiting duration DIFS of another device is greater than the PIFS, collision-free transmission of the second frame may be ensured.

Based on the embodiments shown in FIG. 25 and FIG. 26, a problem that a greedy terminal in an intra-frequency neighboring cell occupies an air interface for a long time and does not release the air interface is avoided, and transmission of a burst sequence is interrupted by using the first frame, so that a low-latency service may be sent in a timely manner, thereby reducing a latency. It may be understood that, in the embodiment shown in FIG. 26, the first frame interrupts the ACK sent by the AP 2. Therefore, a latency is shorter, compared with a latency in the embodiment shown in FIG. 25. It may be understood that, when the AP sends the first frame without performing channel listening, transmission of a service packet on an air interface may be interrupted, as shown in FIG. 25 and FIG. 26. If the AP performs channel listening and sends the first frame when a channel state is idle, the first frame cannot interrupt transmission of a greedy terminal.

With reference to accompanying drawings, the following describes communication apparatuses, in embodiments of this application, configured to implement the foregoing methods. Therefore, all the foregoing content may be used in the following embodiments. Repeated content is not described again.

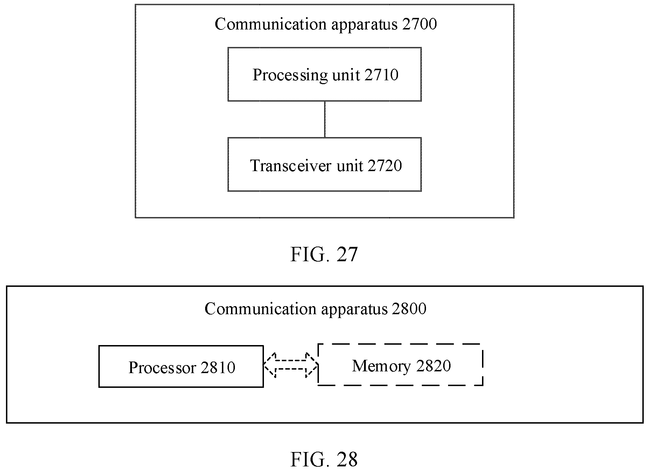

FIG. 27 is a block diagram of a communication apparatus 2700 according to an embodiment of this application. The communication apparatus 2700 may correspondingly implement a function or a step implemented by the first device in the foregoing method embodiments. The communication apparatus may include a processing unit 2710 and a transceiver unit 2720. Optionally, a storage unit may be further included. The storage unit may be configured to store instructions (code or a program) and/or data. The processing unit 2710 and the transceiver unit 2720 may be coupled to the storage unit. For example, the processing unit 2710 may read the instructions (the code or the program) and/or the data in the storage unit, to implement a corresponding method. The foregoing units may be independently disposed, or may be partially or completely integrated.

In some possible implementations, the communication apparatus 2700 can correspondingly implement the behavior and functions of the first device in the foregoing method embodiments. For example, the communication apparatus 2700 may be the first device, or may be a component (for example, a chip or a circuit) used in the first device. The transceiver unit 2720 may be configured to perform all receiving or sending operations performed by the first device in the embodiment shown in FIG. 7, for example, S701 or S702 in the embodiment shown in FIG. 7, and/or configured to support another process of the technology described in this specification. The processing unit 2710 is configured to perform all operations performed by the first device in the embodiment shown in FIG. 7 except receiving and sending operations, and/or configured to support another process of the technology described in this specification.

The transceiver unit 2720 is configured to send a first frame to a second device. The first device does not need to perform channel listening when sending the first frame. The processing unit 2710 is configured to detect a channel state. The transceiver unit 2720 is further configured to: when it is detected that the channel state is idle, send a second frame after waiting for first duration.

For operations performed by the processing unit 2710 and the transceiver unit 2720, refer to the related descriptions in the foregoing method embodiments.

It should be understood that the processing unit 2710 in this embodiment of this application may be implemented by a processor or a processor-related circuit component, and the transceiver unit 2720 may be implemented by a transceiver, a transceiver-related circuit component, or a communication interface.

Based on a same concept, as shown in FIG. 28, an embodiment of this application provides a communication apparatus 2800. The communication apparatus 2800 includes a processor 2810. Optionally, the communication apparatus 2800 may further include a memory 2820, configured to store instructions executed by the processor 2810, or store input data required by the processor 2810 to run instructions, or store data generated after the processor 2810 runs instructions. The processor 2810 may implement the methods shown in the foregoing method embodiments by using the instructions stored in the memory 2820.

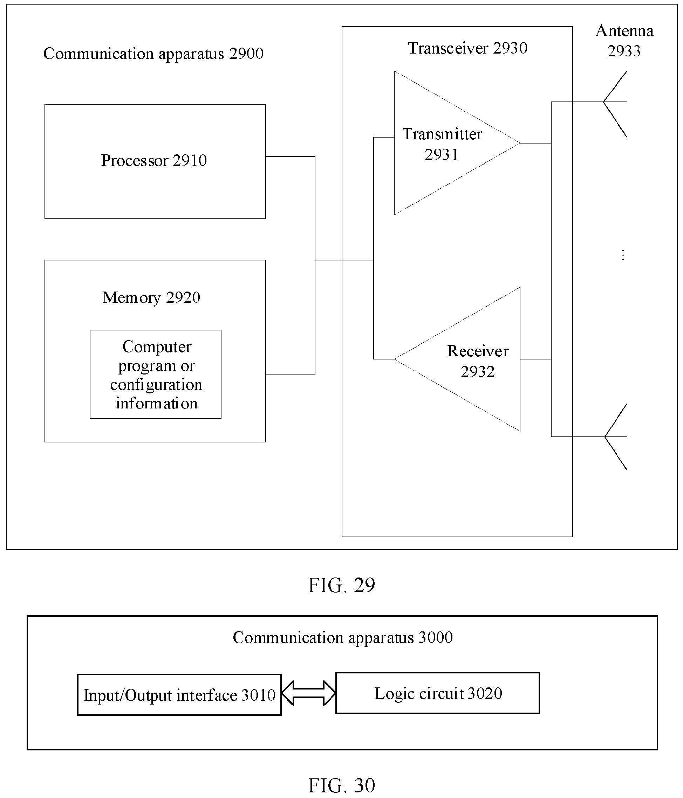

Based on a same concept, as shown in FIG. 29, an embodiment of this application provides a communication apparatus 2900. The communication apparatus 2900 may be a chip or a chip system. Optionally, in this embodiment of this application, the chip system may include a chip, or may include a chip and another discrete device.

The communication apparatus 2900 may include at least one processor 2910. The processor 2910 is coupled to a memory. Optionally, the memory may be located inside the apparatus, or may be located outside the apparatus. For example, the communication apparatus 2900 may further include at least one memory 2920. The memory 2920 stores a necessary computer program, configuration information, a computer program or instructions, and/or data for implementing any one of the foregoing embodiments. The processor 2910 may execute the computer program stored in the memory 2920, to complete the method in any one of the foregoing embodiments.

The coupling in this embodiment of this application may be an indirect coupling or a communication connection between apparatuses, units, or modules in an electrical form, a mechanical form, or another form, and is used for information exchange between the apparatuses, the units, or the modules. The processor 2910 may operate in collaboration with the memory 2920. In this embodiment of this application, a specific connection medium between a transceiver 2930, the processor 2910, and the memory 2920 is not limited.

The communication apparatus 2900 may further include the transceiver 2930, and the communication apparatus 2900 may exchange information with another device by using the transceiver 2930. The transceiver 2930 may be a circuit, a bus, a transceiver, or any other apparatus that may be configured to exchange information, or is referred to as a signal transceiver unit. As shown in FIG. 29, the transceiver 2930 includes a transmitter 2931, a receiver 2932, and an antenna 2933. In addition, when the communication apparatus 2900 is a chip-type apparatus or a circuit, the transceiver in the communication apparatus 2900 may alternatively be an input/output circuit and/or a communication interface, and may input data (or referred to as "receive data") and output data (or referred to as "send data"). The processor is an integrated processor, a microprocessor, or an integrated circuit, and the processor may determine output data based on input data.

In a possible implementation, the communication apparatus 2900 may be used in a first device. Specifically, the communication apparatus 2900 may be the first device, or may be an apparatus that can support the first device in implementing the functions of the first device in any one of the foregoing embodiments. The memory 2920 stores a necessary computer program, a computer program or instructions, and/or data for implementing the functions of the first device in any one of the foregoing embodiments. The processor 2910 may execute the computer program stored in the memory 2920, to complete the method performed by the first device in any one of the foregoing embodiments.

The communication apparatus 2900 provided in this embodiment may be used in a first device, to complete the method performed by the first device. Therefore, for technical effects that can be achieved by this embodiment, refer to the foregoing method embodiments. Details are not described herein again.

In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the methods disclosed with reference to embodiments of this application may be directly performed by a hardware processor, or may be performed by using a combination of hardware in a processor and a software module.

In this embodiment of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of an instruction or a data structure and that can be accessed by a computer, but is not limited thereto. The memory in this embodiment of this application may alternatively be a circuit or any other apparatus that can implement a storage function, and is configured to store a computer program, a computer program or instructions, and/or data.

Based on the foregoing embodiments, refer to FIG. 30. An embodiment of this application further provides another communication apparatus 3000, including an input/output interface 3010 and a logic circuit 3020. The input/output interface 3010 is configured to receive code instructions and transmit the code instructions to the logic circuit 3020. The logic circuit 3020 is configured to run the code instructions to perform the method performed by the first device in any one of the foregoing embodiments.

The following describes in detail an operation performed by the communication apparatus used in the first device or the second device.

In an optional implementation, the communication apparatus 3000 may be used in the first device, to perform the method performed by the first device. For example, the method may be specifically the method performed by the first device in the embodiment shown FIG. 7.

The input/output interface 3010 is configured to send first information to a second device, where the first information indicates a dimension of first state information, and the first state information is input information of a first model. The first model includes a neural network used to assist the second device in performing prediction or decision-making. The input/output interface 3010 is further configured to receive second information from the second device, where the second information includes first state information, and a dimension of the first state information meets the dimension indicated by the first information. The logic circuit 3020 is configured to determine the first model based on the first state information. The input/output interface 3010 is further configured to send third information to the second device, where the third information includes a parameter of the first model, and the parameter of the first model includes at least one of an offset and a weight.

The communication apparatus 3000 provided in this embodiment may be used in a first device, to complete the method performed by the first device. Therefore, for technical effects that can be achieved by this embodiment, refer to the foregoing method embodiments. Details are not described herein again.

Based on the foregoing embodiments, an embodiment of this application further provides a communication system. The communication system includes at least one communication apparatus used in a first device and at least one communication apparatus used in a second device. For technical effects that can be achieved by this embodiment, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by the first device or the method performed by the second device in any one of the foregoing embodiments is implemented. The computer-readable storage medium may include any medium that can store program code, for example, a USB flash drive, a removable hard disk drive, a read-only memory, a random access memory, a magnetic disk, or an optical disc.

To implement the functions of the communication apparatuses in FIG. 27 to FIG. 30, an embodiment of this application further provides a chip, including a processor, configured to support the communication apparatuses in implementing the functions of the first device or the second device in the foregoing method embodiments. In a possible design, the chip is connected to a memory, or the chip includes a memory. The memory is configured to store a computer program or instructions and data that are necessary for the communication apparatuses.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that a computer program or instructions may be used to implement each procedure and/or each block in the flowcharts and/or the block diagrams and a combination of a procedure and/or a block in the flowcharts and/or the block diagrams. The computer program or instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specified function in one or more procedures in the flowcharts and/or in one or more blocks in the block diagrams.

The computer program or instructions may alternatively be stored in a computer-readable memory that can indicate the computer or the another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program or instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specified function in one or more procedures in the flowcharts and/or in one or more blocks in the block diagrams.

It is clear that a person skilled in the art can make various modifications and variations to embodiments of this application without departing from the scope of embodiments of this application. In this case, this application is intended to cover these modifications and variations of embodiments of this application provided that they fall within the scope of the claims of this application and their equivalent technologies.

## Claims

1. A data transmission method, comprising:
sending, by a first device, a first frame to a second device, wherein the first device does not need to perform channel listening when sending the first frame; and
when detecting that a channel state is idle, sending, by the first device, a second frame after waiting for first duration.

2. A data transmission method, comprising:
sending, by a first device, the first frame when detecting that a channel state is idle; and
when detecting that the channel state is idle, sending, by the first device, a second frame after waiting for first duration.

3. The method according to claim 2, wherein the sending, by a first device, the first frame when detecting that a channel state is idle comprises:
when detecting that the channel state is idle, sending, by the first device, the first frame after waiting for specified duration.

4. The method according to claim 3, wherein the specified duration is less than or equal to a PFS.

5. The method according to any one of claims 1 to 4, wherein the first duration is less than or equal to a PIFS.

6. The method according to any one of claims 1 to 5, wherein the first frame comprises a first duration duration field, the first duration field indicates second duration, and the second frame is sent within the second duration.

7. The method according to any one of claims 1 to 6, wherein before the sending, by a first device, a first frame to a second device, the method further comprises:
receiving, by the first device, a third frame from a third device; and
skipping sending, by the first device, an acknowledgement frame for the third frame.

8. The method according to any one of claims 1 to 7, wherein the first frame comprises an acknowledgement frame indicator field, and the acknowledgement frame indicator field indicates that the first frame does not need to be replied with an acknowledgement frame.

9. The method according to any one of claims 1 to 8, wherein the first frame comprises a control frame, or the first frame comprises a data frame.

10. The method according to any one of claims 1 to 9, wherein a received address in the first frame is an address of the first device.

11. The method according to any one of claims 1 to 10, wherein after the first device sends the second frame, the method further comprises:
receiving, by the first device, an acknowledgement frame sent by the second device for the second frame; and
receiving, by the first device, a fourth frame sent by the second device, wherein the second frame comprises a second duration duration field, the second duration field indicates third duration, and the fourth frame is sent within the third duration.

12. A communication device, comprising a processing unit and a transceiver unit, wherein the transceiver unit is configured to send a first frame to a second device, wherein the first device does not need to perform channel listening when sending the first frame;
the processing unit is configured to detect a channel; and
the transceiver unit is further configured to: when it is detected that a channel state is idle, send a second frame after waiting for first duration.

13. A communication device, comprising a processing unit and a transceiver unit, wherein the processing unit is configured to detect a channel;
the transceiver unit is configured to send the first frame when it is detected that a channel state is idle; and
the transceiver unit is further configured to: when it is detected that the channel state is idle, send a second frame after waiting for first duration.

14. The device according to claim 13, wherein the transceiver unit is specifically configured to:
when it is detected that the channel state is idle, send the first frame after waiting for specified duration.

15. The device according to claim 14, wherein the specified duration is less than or equal to a PFS.

16. The device according to any one of claims 12 to 15, wherein the first duration is less than or equal to a PIFS.

17. The device according to any one of claims 12 to 16, wherein the first frame comprises a first duration duration field, the first duration field indicates second duration, and the second frame is sent within the second duration.

18. The device according to any one of claims 12 to 17, wherein the transceiver unit is further configured to:
receive a third frame from a third device; and
the processing unit is further configured to determine not to send an acknowledgement frame for the third frame.

19. The device according to any one of claims 12 to 18, wherein the first frame comprises an acknowledgement frame indicator field, and the acknowledgement frame indicator field indicates that the first frame does not need to be replied with an acknowledgement frame.

20. The device according to any one of claims 12 to 19, wherein the first frame comprises a control frame, or the first frame comprises a data frame.

21. The device according to any one of claims 12 to 20, wherein a received address in the first frame is an address of the first device.

22. The device according to any one of claims 12 to 21, wherein the transceiver unit is further configured to:
receive an acknowledgement frame sent by the second device for the second frame; and
receive a fourth frame sent by the second device, wherein the second frame comprises a second duration duration field, the second duration field indicates third duration, and the fourth frame is sent within the third duration.

23. A communication apparatus, comprising a processor and a memory, wherein
the memory is configured to store a computer program or instructions; and
the processor is configured to execute the computer program or instructions in the memory, so that the apparatus performs the method according to any one of claims 1 or 5 to 11, or the apparatus performs the method according to any one of claims 2 to 11.

24. A computer-readable storage medium, wherein the computer-readable storage medium stores computer-executable instructions, and when the computer-executable instructions are invoked by an electronic apparatus, the electronic apparatus is enabled to perform the method according to any one of claims 1 or 5 to 11, or the electronic apparatus is enabled to perform the method according to any one of claims 2 to 11.

25. A computer program product, comprising computer-executable instructions, wherein when the computer-executable instructions are run on a computer, the computer is enabled to perform the method according to any one of claims 1 to 11.

26. A chip system, wherein the chip system comprises:
a communication interface; and
a processor, configured to invoke and run the instructions by using the communication interface, so that a device on which the chip system is installed performs the method according to any one of claims 1 or 5 to 11, or a device on which the chip system is installed performs the method according to any one of claims 2 to 11.
